Europäisches Patentamt

European Patent Office

Office européen des brevets

(11) Veröffentlichungsnummer: **0 012 358**
**B1**

(12) **EUROPÄISCHE PATENTSCHRIFT**

(19)

(45) Veröffentlichungstag der Patentschrift:
**12.05.82**

(21) Anmeldenummer: **79104947.1**

(22) Anmeldetag: **05.12.79**

(51) Int. Cl.³: **C 08 F 220/18** // (C08F220/18,
220/44, 220/06, 220/58)

(54) **Wässrige Copolymerisatdispersionen, hergestellt nach einem speziellen Verfahren, das Verfahren zu ihrer Herstellung und ihre Verwendung als Bindemittel in wässrigen Anstrichmitteln.**

(30) Priorität: **16.12.78 DE 2854491**

(43) Veröffentlichungstag der Anmeldung:
**25.06.80 Patentblatt 80/13**

(45) Bekanntmachung des Hinweises auf die Patenterteilung:
**12.05.82 Patentblatt 82/19**

(84) Benannte Vertragsstaaten:
**BE DE FR GB IT NL**

(56) Entgegenhaltungen:
**CH-A-368 567**
**DE-A-1 520 533**

(73) Patentinhaber: **BAYER AG, Zentralbereich Patente, Marken und Lizenzen, D-5090 Leverkusen 1, Bayerwerk (DE)**

(72) Erfinder: **Schmidt, Adolf, Dr., Roggendorfstrasse 67, D-5000 Köln 80 (DE)**
Erfinder: **Clarenz, Werner, Dr., Walter-Flex-Strasse 32, D-5090 Leverkusen 1 (DE)**

## Wäßrige Copolymerisatdispersionen, hergestellt nach einem speziellen Verfahren, das Verfahren zu ihrer Herstellung und ihre Verwendung als Bindemittel in wäßrigen Anstrichmitteln

Die Erfindung betrifft ein Verfahren zur Herstellung wäßriger Dispersionen auf der Basis von Acrylsäure-n-butylester/Acrylnitril/(Meth)Acrylsäurecopolymerisaten, welche als Bindemittel in unpigmentierten oder pigmentierten, wäßrigen Dispersionsanstrichmitteln für Metalle, Holz, Kunststoffe und mineralische Substrate hervorragend geeignet sind.

Aus der deutschen Patentschrift 980 059 ist es bekannt, saure, stabile wäßrige Dispersionen von Copolymerisaten aus copolymerisierten Einheiten von 1−40 Gew.-% Acrylnitril, 50−95 Gew.-% eines Acrylsäurealkylesters mit 3−8 C-Atomen in der Alkoholkomponente, 3−6 Gew.-% Acrylsäure und gegebenenfalls bis zu 20 Gew.-% anderer copolymerisierbaren Monomeren durch Copolymerisation der vorgenannten Monomeren in Gegenwart von Radikalbildnern und von in saurem Medium beständigen Emulgatoren und gegebenenfalls Schutzkolloiden sowie Molekulargewichtsreglern bei Temperaturen bis etwa 90°C herzustellen. Die Dispersionen sind im allgemeinen durch Ammoniak verdickbar und werden als Beschichtungsmittel für textile oder Glasgewebe, als Bindemittel für Lederdeckfarben und als Klebemittel für Papier, Kunstharz- oder Metallfolien verwendet.

Dieser Schrift läßt sich nicht entnehmen bzw. durch diese Schrift wird nicht nahegelegt, daß spezielle, ausgewählte Monomerenkombinationen aus Acrylnitril, Acrylsäure-n-butylester, (Meth)Acrylsäure oder einem Gemisch aus Methacrylsäure und Acrylsäure, wobei ein bestimmter Anteil des Acrylnitrils durch Styrol ersetzt sein kann, und wobei gegebenenfalls die Monomerenkombinationen geringe Mengen N-Methoxymethyl-methacrylamid enthalten können, durch eine kritische Kombination an sich bekannter Verfahrensschritte in wäßrige Copolymerisatdispersionen überführt werden können, welche hervorragend als Bindemittel für unpigmentierte oder pigmentierte, vorzugsweise bei Raumtemperatur auftrocknende Anstrichmittel für Metalle, Holz, Kunststoffe und mineralische Substrate geeignet sind.

Aus der US-PS 2 787 603 ist es ferner u. a. bekannt, ein Gemisch aus 30 Gew.-Teilen Acrylnitril, 65 Gew.-Teilen n-Butylacrylat und 5 Gew.-Teilen Methacrylsäure durch Emulsionspolymerisation in eine Copolymerisatdispersion (vgl. Beispiel IV) zu überführen und die erhaltene Dispersion nach Zusatz eines mit Wasser verdünnbaren Phenolformaldehydharzes und Einstellen eines pH-Wertes von ca. 9,4 als ofentrocknendes, wäßriges Überzugsmittel für Metalldrähte oder keramische Substrate zu verwenden.

Nach dem Verfahren der US-Patentschrift 2 787 603 (Beispiel IV) lassen sich Dispersionen mit einem Feststoffgehalt von 35 Gew.-% herstellen. Die mittlere Teilchengröße dieser Dispersionen liegt unter 0,1 µm. Diese Dispersionen verdicken aber auf Ammoniakzusatz zu zähen unhandlichen Pasten, sind überdies pigmentunverträglich und daher als Bindemittel für wäßrige, pigmentierte Anstrichmittel ungeeignet. Versucht man nach dem Verfahren der US-Patentschrift (Beispiele IV + I) Dispersionen mit einem Feststoffgehalt von mehr als 40 Gew.-%, beispielsweise 42 Gew.-%, herzustellen, so erhält man stark koagulathaltige Dispersionen, welche nach dem Absieben des Koagulats (mittlere Teilchengröße der vom Koagulat befreiten Dispersion 0,16 µm) auf Zusatz von Ammoniak (10 bis 25%ig) auf pH 8,5 zu nicht fließfähigen Pasten verdicken und daher als Bindemittel für wäßrige, pigmentierte Anstrichmittel ebenfalls ungeeignet sind. (Siehe Vergleichsversuche gegenüber der US-Patentschrift 2 787 603 im experimentellen Teil dieser Anmeldung.)

Aufgabe der vorliegenden Erfindung war es nun, ein Verfahren aufzufinden, das 40−50gewichtsprozentige, koagulat- und stippenfreie, lager-, elektrolyt- und scherstabile, lösungsmittel- und schutzkolloidverträgliche, sowie pigmentstabile und füllstoff-indifferente, feinteilige (mittlere Teilchendurchmesser 0,1 bis 0,15 µm) und gleichzeitig gefrier- und auftaustabile, wäßrige Kunststoffdispersionen mit enger Teilchendurchmesserverteilung liefert.

Gleichzeitig sollten die wäßrigen Kunststoffdispersionen beim Einstellen auf einen pH-Wert von 7,5−9, vorzugsweise 8−8,5, durch Zugabe von wäßrigem Ammoniak gerade bis zur Grenze der Fließfähigkeit ohne wesentliche Änderung des Feststoffgehaltes verdickbar sein, ohne jedoch einen (Meth)Acrylsäureanteil von 3,5 Gew.-%, bezogen auf Polymerisat, zu unterschreiten.

Darüber hinaus sollte die Mindestfilmbildungstemperatur der Dispersionen, bestimmt nach DIN 53 787 (ohne Weichmacher- und/oder Lösungsmittelzusätze), nicht über 30°C liegen, während der Haupterweichungsbereich der Copolymerisate, bestimmt aus dem Maximum der Dämpfung beim Torsionsschwingungsversuch nach DIN 53 520, gleichzeitig mindestens +18°C betragen sollte, um einerseits eine gute Filmbildung bei möglichst tiefen Temperaturen zu ermöglichen, andererseits aber bei höheren Temperaturen (bis +80°C) eine gute Blockfestigkeit, möglichst hohe Härte und geringe Verschmutzungstendenz zu ermöglichen.

Die aus den Kunststoffdispersionen hergestellten, unpigmentierten und pigmentierten Filme sollten riß- und porenfrei auftrocknen, eine gute Haftung zum Substrat zeigen, gute mechanische Werte, einen hohen Glanz und eine gute Blockfestigkeit aufweisen. Ferner sollten die aufgetrockneten Filme wasser-, benzin- und aromatenfest sowie witterungsbeständig sein.

Neben den üblichen Auftragsverfahren für Kunststoffdispersionen sollten die pigmentierten Kunststoffdispersionen (= Anstrichmittel) auch durch Pinselauftrag appliziert werden können. Die Summe dieser Forderungen konnte bisher durch keine der bekannten Kunststoffdispersionen erfüllt werden.

Die Aufgabe wurde dadurch gelöst, daß die Copolymerisatdispersionen der beanspruchten Zusammensetzung durch eine kritische Kombination an sich bekannter Verfahrensschritte unter Verwendung eines speziellen Emulgators hergestellt wurden.

Gegenstand der Erfindung ist somit ein Verfahren zur Herstellung von feinteiligen, wäßrigen Dispersionen mit einem mittleren Teilchendurchmesser von $0{,}1-0{,}15\,\mu m$, sowie mit einem Feststoffgehalt von $40-50$ Gew.-% von Copolymerisaten aus copolymerisierten Einheiten von:

(A) 20 bis 48 Gew.-%,    vorzugsweise 22 bis 40 Gew.-%, Acrylnitril, wobei jeweils 40 bis 60 Gew.-% der angegebenen Menge des Acrylnitrils durch Styrol ersetzt sein können,

(B) 47,5 bis 70,5 Gew.-%, vorzugsweise 52,5 bis 69,5 Gew.-%, n-Butylacrylat,

(C) 3,5 bis 4,5 Gew.-%    Methacrylsäure oder einer Mischung aus Methacrylsäure und Acrylsäure mit einem Acrylsäureanteil von höchstens 50 Gew.-%, sowie

(D) 0 bis 5 Gew.-%    N-Methoxymethyl-methacrylamid

— die Summe der Prozentgehalte beträgt 100 —

durch Emulsionspolymerisation unter Luftausschluß und Rühren bis zu praktisch vollständigem Monomerenumsatz bei Temperaturen von $30-70°C$, vorzugsweise $50-65°C$, in Gegenwart eines Emulgators und eines wasserlöslichen Initiatorsystems unter Zugabe eines Teils der Monomeren A bis D, eines Teils des in Wasser gelösten Emulgators sowie eines Teiles des in Wasser gelösten Initiatorsystems zu einer Vorlage aus Wasser, Monomerengemisch und Emulgator nach Auslösung der Polymerisation, gekennzeichnet durch die Kombination der Maßnahmen, daß man

I.   a)   $59{,}7-48{,}4$ Gew.-% Wasser ($p_{H_2O\ ges.}$), wobei

$p_{H_2O\ ges.} = p_{H_2O\ E.v.} + p_{H_2O\ Ox.v.} + p_{H_2O\ Red.v} + p_{H_2O\ E.n.} + p_{H_2O\ Ox.n.} + p_{H_2O\ Red.n.}$
bedeutet,

    b)   $40{,}0-50{,}0$ Gew.-% Monomerengemisch ($p_{Mon\ ges}$) aus den Komponenten A bis D, wobei

$p_{Mon.\ ges.} = p_{Mon.v.} + p_{Mon.n.}$
ist,

    c)   $0{,}25-2{,}0$ Gew.-% Emulgator, $p_{E.\ ges}$, wobe

$p_{E\ ges.} = p_{E.v.} + p_{E.n.}$
ist, und

    d)   $0{,}025-0{,}4$ Gew.-% eines Initiatorsystems, $p_{ges.}$, wobei

$p_{I.ges}$ für $p_{I.v.} + p_{I.n.} = p_{Ox.v.} + p_{Red.v} + p_{Ox.n} + p_{Red.n.} = p_{Ox\ ges.} + p_{Red.ges.}$
steht,

— wobei ferner das Initiatorsystem $p_{I.ges}$ aus Kalium- oder Ammoniumperoxidisulfat oder deren Mischungen oder aus den erwähnten Persulfaten und Natrium- oder Kaliumpyrosulfit oder deren Mischungen besteht, und

— wobei der Emulgator das Ammoniumsalz des sauren Schwefelsäureesters des Anlagerungsproduktes von durchschnittlich 10 Mol Ethylenoxid an 1 Mol Laurylalkohol darstellt, wobei ferner die Zusammnesetzung des Monomerengemisches aus den Monomeren A bis D der integralen Zusammensetzung des gewünschten Copolymerisats entspricht, und die Summe der Gewichtsprozente der Komponenten Ia bis Id 100 beträgt —

einsetzt;

II.   a)   das Verhältnis $k_{Mon.}$ der vorgelegten Monomerenmenge, $p_{Mon.v}$, zur Summe von vorgelegter Monomerenmenge und insgesamt vorgelegter Wassermenge,

$p_{H_2O\ v.ges.} = p_{H_2O\ E.v.} + p_{H_2O\ Ox.v.} + p_{H_2O\ Red\ v}$
auf:

$$k_{Mon.} = \frac{p_{Mon.v.}}{(p_{Mon.v.} + p_{H_2O\ v.ges.})} \times 100 = 5{,}0-20,$$

vorzugsweise $7-15$,

3

b) die Konzentration $[E]_v$ der vorgelegten Emulgatormenge $p_{E.v.}$ in der insgesamt vorgelegten Wassermenge, $p_{H_2O\ v.\ ges.}$ auf:

$$[E]_v = \frac{p_{E.v.}}{p_{H_2O\ v.\ ges.}} \times 1000 = 2-40,$$

vorzugsweise 3—10,

c) die Konzentration $[I]_v$ der vorgelegten Initiatormenge, $p_{I\ v.} = p_{Ox.v.} + p_{Red.v.}$, in der insgesamt vorgelegten Wassermenge, $p_{H_2O\ v.\ ges.}$, auf:

$$[I]_v = \frac{p_{I.v.}}{p_{H_2O\ v.\ ges.}} \times 1000 = 0,5-4,$$

vorzugsweise 1,0—2,5,

d) das Gewichtsverhältnis $k_I$ von Pyrosulfit zu Persulfat auf Werte von:

$$k_I = \frac{p_{Red.\ ges.}}{p_{Ox.\ ges.}} = 0-4,\ \text{vorzugsweise auf}\ 0-1,$$

wobei der Wert 0 bei Polymerisationstemperaturen oberhalb +55°C bis 70°C und die Werte >0 bis 4 bei Polymerisationstemperaturen von 30 bis 70°C gelten,

e) das Gewichtsverhältnis $v_{Mon.}$ von vorgelegter zu insgesamt eingesetzter Monomerenmenge auf Werte von

$$v_{Mon.} = \frac{p_{Mon.v.}}{(p_{Mon.v.} + p_{Mon.n.})} \times 100 = 2-15,$$

vorzugsweise 8—10,

festlegt;

III. die Vorlage aus den Komponenten $p_{H_2O\ E.v.} + p_{Mon.v.} + p_{E.v.}$ auf die gewünschte, im Bereich von 30—70°C liegende Polymerisationstemperatur erwärmt, die Komponenten $p_{Ox.v.}$, gelöst in $p_{H_2O\ Ox.v.}$ und $p_{Red.v.}$, gelöst in $p_{H_2O\ Red.v.}$, gleichzeitig, aber getrennt, zufügt, wobei eine konstante Polymerisationstemperatur, gegebenenfalls unter Kühlen, eingehalten wird, die restlichen Komponenten, $p_{Mon.n.}$, $p_{E.n.}$ gelöst in $p_{H_2O\ E.n.}$ und $p_{I.n.} = p_{Ox.n.} + p_{Red.n.}$, gelöst in $p_{H_2O\ Ox.n.}$ und $p_{H_2O\ Red.n.}$, im Laufe von 2—8 Stunden kontinuierlich in das polymerisierende Gemisch nachdosiert und 2—4 Stunden bei der Polymerisationstemperatur nachrührt.

Die in der Definition der Erfindung verwendeten Abkürzungen bedeuten:

$p_{H_2O\ ges.}$ = Gesamtmenge Wasser im Polymerisationsansatz in Gew.-%;
$p_{H_2O\ v.\ ges.}$ = Gesamtmenge des vorgelegten Wassers in Gew.-%;
$p_{H_2O\ Ox.v.}$ = Menge Wasser für vorgelegte Oxidationskomponente des Initiatorsystems in Gew.-%;
$p_{H_2O\ Red.v.}$ = Menge Wasser für vorgelegte Reduktionskomponente des Initiatorsystems in Gew.-%;
$p_{H_2O\ E.n.}$ = Menge Wasser für nachdosierten Emulgator in Gew.-%;
$p_{H_2O\ E.v.}$ = Menge Wasser für vorgelegten Emulgator in Gew.-%;
$p_{H_2O\ Ox.n.}$ = Menge Wasser für nachdosierte Oxidationskomponente des Initiatorsystems in Gew.-%;
$p_{H_2O\ Red.n.}$ = Menge Wasser für nachdosierte Reduktionskomponente des Initiatorsystems in Gew.-%;
$p_{Mon.\ ges.}$ = Gesamtmenge der eingesetzten Monomeren in Gew.-%;
$p_{Mon.v.}$ = Vorgelegte Monomermenge in Gew.-%;
$p_{Mon.n.}$ = Nachdosierte Monomermenge in Gew.-%;
$p_{E.\ ges.}$ = Gesamtmenge des Emulgators in Gew.-%;
$p_{E.v.}$ = Menge des vorgelegten Emulgators in Gew.-%;
$p_{E.n.}$ = Menge des nachdosierten Emulgators in Gew.-%;
$p_{I.\ ges.}$ = Gesamtmenge des Initiatorsystems in Gew.-%;
$p_{I.v.}$ = Vorgelegte Menge des Initiatorsystems in Gew.-%;
$p_{I.n.}$ = Nachdosierte Menge des Initiatorsystems in Gew.-%;
$p_{Ox.v.}$ = Menge der vorgelegten Oxidationskomponente des Initiatorsystems in Gew.-%;
$p_{Red.v.}$ = Menge der vorgelegten Reduktionskomponente des Initiatorsystems in Gew.-%;
$p_{Ox.n.}$ = Menge der nachdosierten Oxidationskomponente des Initiatorsystems in Gew.-%;

4

$p_{Red.\,n.}$ = Menge der nachdosierten Reduktionskomponente des Initiatorsystems in Gew.-%;

$p_{Ox.\,ges.}$ = Gesamtmenge der Oxidationskomponente des Initiatorsystems in Gew.-%;

$p_{Red.\,ges.}$ = Gesamtmenge der Reduktionskomponente des Initiatorsystems in Ges.-%.

Die Konzentration $[E]_v$ und $[I]_v$ bedeuten g Emulgator bzw. g Initiator in 1000 g Wasser und sind dimensionslos.

Besonders bevorzugte Copolymerisatdispersionen enthalten in den Copolymerisaten copolymerisierte Einheiten von

a)  47,5 – 49 Gew.-%  n-Butylacrylat
45 – 47 Gew.-%  Acrylnitril
3,5 – 3,7 Gew.-%  Methacrylsäure
2,3 – 2,7 Gew.-%  N-Methoxymethyl-methacrylamid

b)  55 – 57 Gew.-%  n-Butylacrylat
38 – 40 Gew.-%  Acrylnitril
1,8 – 2,2 Gew.-%  Methacrylsäure
1,8 – 2,2 Gew.-%  Acrylsäure

c)  60 – 62 Gew.-%  n-Butylacrylat
32 – 33 Gew.-%  Acrylnitril
3,8 – 4,2 Gew.-%  Methacrylsäure
2,3 – 2,7 Gew.-%  N-Methoxymethyl-methacrylamid

d)  62 – 64 Gew.-%  n-Butylacrylat
32 – 34 Gew.-%  Acrylnitril
3,8 – 4,2 Gew.-%  Methacrylsäure

e)  67 – 69 Gew.-%  n-Butylacrylat
24 – 26 Gew.-%  Acrylnitril
3,8 – 4,2 Gew.-%  Methacrylsäure
2,3 – 2,7 Gew.-%  N-Methoxymethylmethacrylamid.

Falls gewünscht, können in den Copolymerisatdispersionen die copolymerisierten Einheiten des Acrylnitrils teilweise auch durch Styrol ersetzt sein. Die Copolymerisate derartiger Dispersionen können beispielsweise aus copolymerisierten Einheiten von

56 – 62 Gew.-%  n-Butylacrylat,
34 – 40 Gew.-%  einer Mischung aus Acrylnitril und Styrol, wobei der Acrylnitrilanteil dieser Mischung 40 bis 60 Gew.-% beträgt,
3,5 – 4,5 Gew.-%  Methacrylsäure oder einer Mischung aus Methacrylsäure und Acrylsäure mit einem Acrylsäureanteil von höchstens 50 Gew.-%, sowie
0 – 5 Gew.-%  N-Methoxymethyl-methacrylamid

aufgebaut sein.

Ein besonders bevorzugtes, Styroleinheiten enthaltendes Copolymerisat ist aus copolymerisierten Einheiten von

17 – 19 Gew.-%  Acrylnitril
17 – 19 Gew.-%  Styrol
57 – 59 Gew.-%  n-Butylacrylat und
3,8 – 4,2 Gew.-%  Methacrylsäure

aufgebaut.

Die Monomeren A bis D werden beim erfindungsgemäßen Verfahren praktisch im gleichen Verhältnis in das Copolymerisat eingebaut, wie sie eingesetzt werden, d. h., die Zusammensetzung des Monomerengemisches aus den Monomeren A bis D entspricht der integralen Zusammensetzung des gewünschten Copolymerisats.

Die oxidierend wirkende Komponente des Redoxsystems ist Kalium und/oder Ammoniumpersulfat. Von der reduzierend wirkenden Komponente, Natrium- oder Kaliumpyrosulfit, wird aus wirtschaftlichen Gründen Natriumpyrosulfit bevorzugt.

Bei Temperaturen oberhalb +55°C kann mit Vorteil auch ohne reduzierend wirkende Komponente gearbeitet werden ($p_{Red.\,ges.}/p_{Ox.\,ges.} = 0$).

Der erfindungsgemäß zu verwendende anionische Emulgator ist das Ammoniumsalz des sauren Schwefelsäureesters des Anlagerungsproduktes von Ethylenoxid an Laurylalkohol. Das oxethylierte Anlagerungsprodukt enthält durchschnittlich 10 Mol Ethylenoxideinheiten, bezogen auf 1 Mol Laurylalkohol. Der Ausdruck »Laurylalkohol« schließt in der vorliegenden Anmeldung handelsüblichen Laurylalkohol in technischer Reinheit ein, wie er käuflich zum Beispiel unter der Bezeichnung Lorol®-technisch (Markenzeichen der Dehydrag, Bundesrepublik Deutschland) erworben werden kann. Ein derartiges Lorol®-technisch enthält ca. 0−3 Gew.-% $C_{10}$-Fettalkohol, 48−58 Gew.-% $C_{12}$-Fettalkohol (Laurylalkohol), 19−24 Gew.-% $C_{14}$-Fettalkohol, 9−11 Gew.-% $C_{16}$-Fettalkohol und 10−13 Gew.-% $C_{18}$-Fettalkohol und besitzt eine OH-Zahl von 265−275 mg KOH pro g Substanz.

Wird im erfindungsgemäßen Verfahren ein anderer Emulgator als angegeben verwendet, beispielsweise Natriumlaurylsulfat oder Natriumsalze von Paraffinsulfonaten mit einer Kettenlänge von 12 bis 20 C-Atomen oder Salze des Sulfobernsteinsäuredioctylesters, so besitzen die dann erhaltenen Dispersionen eine wesentlich schlechtere Pigment-, Elektrolyt- und Scherstabilität, eine verringerte Oberflächenspannung und eine verstärkte Tendenz zur Schaumbildung, welche sich insbesonders bei dem Entfernen von Restmonomeren aus der Dispersion lästig bemerkbar machen kann.

Werden die im Anspruch 1 unter II) angegebenen Bedingungen, d. h., die Mengenbereiche der Vorlagen, nicht eingehalten, so werden Dispersionen erhalten, deren Teilchengröße außerhalb des Teilchengrößenbereiches von 0,1 μm bis 0,15 μm liegt, die ferner entweder nicht mehr mit Ammoniak verdickbar oder aber nach Ammoniakzugabe nicht mehr fließfähig sind, und die nicht die ausgezeichnete Elektrolyt- und Pigmentverträglichkeit der erfindungsgemäß erhaltenen Dispersionen besitzen.

Das Nachdosieren der Komponenten $p_{H2O\,n.}$, $p_{Mon.\,n.}$, $p_{E.\,n.}$ und $p_{I.\,n.}$ zu der Vorlage aus den Komponenten $p_{H2O\,v.\,ges.}$, $p_{Mon.\,v.}$, $p_{E.\,v.}$ und $p_{I.\,v.}$ erfolgt in 2−8 Stunden, vorzugsweise in 4−7 Stunden, wobei für kleinere Ansätze (3 bis ca. 250 kg Gesamtkomponenten) 2 bis 5 Stunden, für größere Ansätze (ca. 250 bis 30 000 kg Gesamtkomponenten) 5 bis 8 Stunden, insbesondere 6−7 Stunden, bevorzugt sind. Bei kürzeren Nachdosierungszeiten als angegeben ist einmal die zur Konstanthaltung der gewünschten Polymerisationstemperatur notwendige Abführung der Polymerisationswärme außerordentlich erschwert, zum anderen verdicken bei kürzeren Zudosierungszeiten di erhaltenen Dispersionen nach Zugabe gleicher Mengen Ammoniak bei praktisch gleicher Teilchengröße wesentlich stärker (über die Fließgrenze hinaus) als Dispersionen, die unter Einhaltung der angegebenen Zudosierungszeiten hergestellt wurden. Höhere Zudosierungszeiten sind nicht nur unwirtschaftlich, sondern bewirken auch eine Verfärbung der Dispersionen.

Die erfindungsgemäß erhaltenen wäßrigen Dispersionen haben vorzugsweise einen Feststoffgehalt von ca. 45−50 Gew.-%, sind praktisch koagulat- und stippenfrei, lager-, elektrolyt- und scherstabil, lösungsmittel- und schutzkolloidverträglich, sowie pigmentstabil und füllstoff-indifferent. Sie lassen sich problemlos entgasen. Die mittleren Teilchendurchmesser der Copolymerisate liegen zwischen >0,1 μm und <0,15 μm. Bei Zugabe von wäßrigem, konzentrierten Ammoniak bis auf einen pH-Wert von ca. 7,5−9 können sie bis zur Grenze der Fließfähigkeit verdicken. Die mittleren Filmbildungstemperaturen liegen nicht über +30°C, die Glasübergangstemperaturen betragen gleichzeitig mindestens +18°C, die Haupterweichungsbereiche der Polymerisate, ermittelt aus dem logarithmischen Dekrement der mechanischen Dämpfung nach DIN 53 520, liegen über +30°C.

Den wäßrigen, erfindungsgemäß erhaltenen Copolymerisatdispersionen können übliche Hilfsmittel zugesetzt werden, wie z. B. anorganische und organische Pigmente, vorzugsweise anorganische Pigmente, optische Aufheller, oberflächenaktive Substanzen, Antischaummittel, Verdickungsmittel wie Celluloseether oder -ester, Polyvinylalkohol, Ammoniumsalze der Polyacrylsäure; Weichmacher, Fungizide, Bakterizide, Rostinhibitoren, Füllstoffe wie Kreide, Talkum, Glimmer, Alterungsschutzmittel, Trennmittel wie Siliconöle, Wachse, Polyethylen- und Polyurethan-Dispersionen. Als anorganische Pigmente oder deren Mischungen können beispielsweise Titandioxid, Calciumcarbonat, Eisenoxide, Cadmiumpigmente verwendet werden.

Die Herstellung der wäßrigen Anstrichmittel kann auf den üblichen Abreibeaggregaten, wie z. B. Dissolver, Kugelmühlen, Sandmühlen u. a. m., erfolgen.

Die wäßrigen Anstrichmittel können durch Tauchen, Streichen, Besprühen, Spritzen, Fluten, Berakeln, Gießen oder ähnliche Verfahren appliziert werden und trocknen riß- und porenfrei. Es kann bei Raumtemperatur und bei höheren Temperaturen, beispielsweise 50−150°C, forciert getrocknet werden. Das letztgenannte Verfahren ist bei den Dispersionen mit Filmbildetemperaturen über +20°C angezeigt.

Die wäßrigen Anstrichmittel können als Einschicht- oder Mehrschichtsystem auf Metallen, mineralischen Untergründen, Kunststoffen und auf Holz Verwendung finden.

Die Überzüge sind wetterfest und zeichnen sich durch eine große Zähigkeit und hohe Dehnbarkeit aus. Es wurde gefunden, daß sich mit den erfindungsgemäßen Bindemitteln Anstrichstoffe herstellen lassen, die eine deutlich geringere Strukturviskosität und höhere innere Zähigkeit des verarbeitungsfähigen Materials zeigen als das mit den bekannten Dispersionen möglich ist. Hierdurch ergibt sich ein verbesserter Verlauf der Anstrichmaterialien, was besonders bei der Verarbeitung mit einem Pinsel vorteilhaft ist. Die Überzüge sind wasser-, benzin- und aromatenfest und witterungsbeständig.

Weiterhin wurde festgestellt, daß diese Bindemittel eine hohe Filmhärte bei einer vergleichsweise niedrigen Mindestfilmbildungstemperatur besitzen.

Die Überzüge mit diesen Anstrichstoffen zeigen eine überlegene Blockfestigkeit und lassen sich in einer Glanzhöhe einstellen, die mit den bekannten Dispersionen nicht erreicht wird.

Die Summe der beschriebenen Eigenschaften läßt vielseitige Anwendungen der erfindungsgemäßen Dispersionen auf den verschiedenen Substraten wie Metallen, Holz, Kunststoffen und mineralischen Untergründen zu. Anwendungen im Malerbereich sind ebensogut möglich wie im Bereich industrieller Serienbeschichtungen.

Die in den Beispielen und Vergleichsversuchen angegebenen Teile und Prozente beziehen sich, sofern nicht anders vermerkt, auf das Gewicht.

Experimenteller Teil

1. Erläuterungen

n-Butylacrylat (abgekürzt AB), Acrylnitril (ACN), Styrol (S) wurden in frisch destilliertem Zustand, Acrylsäure (AS) und Methacrylsäure (MAS) in handelsüblicher Form mit Wassergehalten von 0,1 — 10 Gew.-% eingesetzt. Die in den folgenden Beispielen angegebenen Gewichtsteile bzw. Gewichtsprozente an Säure(n) beziehen sich aber stets auf eine wasserfreie, 100%ige Ware.

Die Reinheit der eingesetzten Monomeren lag nach gaschromatographischen Untersuchungen bei AB, ACN und S bei über 99,9 Gew.-%, bei AS und MAS bei über 99,7%, wobei Wasser unberücksichtigt bleibt. Die verwendeten Alkalipersulfate und das Natriumpyrosulfit besaßen pA-Qualität (pA = pro analysis).

Das bei der Polymerisation eingesetzte entionisierte Wasser wurde durch Auskochen am Rückfluß unter gleichzeitigem Einleiten von Stickstoff von darin gelöstem Luftsauerstoff befreit und gelangte über Zuleitungen unter Luftausschluß in die mit Inertgas (Stickstoff) gefüllten Polymerisationsapparaturen.

Zur Herstellung des in den Beispielen der vorliegenden Anmeldung eingesetzten Emulgators*) wird handelsüblicher Laurylalkohol in technischer Reinheit, ein Fettalkoholgemisch aus ca. 48 bis 58% Dodecylalkohol, 19 bis 24% Tetradecylalkohol, 9 bis 12% Hexadecylalkohol und 10 bis 13% Octadecylalkohol, verwendet. Ein Mol dieses Laurylalkohols wird unter alkalischer Katalyse bei 130 bis 140° C mit 10 Mol Ethylenoxid zum entsprechenden Polyglykolether umgesetzt.

Dieses Vorprodukt wird durch Reaktion mit 1,0 Mol Chlorsulfonsäure in der üblichen Weise in den Schwefelsäureester überführt, welcher nach der Neutralisation mit wäßrigem Ammoniak das entsprechende Ammoniumsalz ergibt. Der Emulgator kommt meist als 35—40%ige wäßrige Lösung zum Einsatz. Die in den Beispielen angegebenen Emulgatormengen beziehen sich stets auf 100% waschaktive Substanz (% WAS).

Das im Emulgator enthaltene Wasser wird bei der Wasserbilanz der Ansätze genau berücksichtigt.

Die Emulsionspolymerisation wurde im Labor in einem 4-Ltr.-Fünfhalskolben aus Jenaer Glas mit motorgetriebenem KPG-Rührwerk nach Weygand (vgl. C. Weygand, Chem. Techn. 16, 64, 1943) mit zwei um 90° gegeneinander versetzten, durch Zentrifugalkraft spreizbaren Teflonflügeln, Stickstoffzuleitung, Rückflußkühler mit aufgesetztem Gasblasenzähler, Innenthermometer bzw. Thermofühlerhülse und Anschlüssen für die Zuleitungen der zuzupumpenden Lösungen bzw. Monomerengemische unter Ausschluß von Luftsauerstoff durchgeführt.

Obwohl die Rührgeschwindigkeit in weiten Grenzen unkritisch ist, muß Schaumbildung durch zu heftiges Turburieren vermieden werden, wie andererseits zu langsames Rühren eine erhöhte Ausfall- und Stippenbildung und einen verringerten Monomerenumsatz begünstigt. Es konnten Blatt-, Anker- und Kreuzbalkenrührer eingesetzt werden.

Im 4-Ltr.-Maßstab wählte man Rührgeschwindigkeiten von ca. 250 UpM (Umdrehungen pro Min.), im 40-Ltr.-Autoklav 120 UpM, im 250-Ltr.-Rührkessel 80 UpM, im 10 000-Ltr.-Autoklav 35—45 UpM.

Die Innentemperatur, gemessen im Latex, wurde in allen Fällen über elektronische Temperaturregler auf etwa ±0,3° C genau eingehalten.

Die acrylnitrilhaltigen Monomerengemische wurden so gehandhabt, daß ein Kontakt über Einatmung und Haut ausgeschlossen war. Entsprechendes galt für die nach der Polymerisation anfallenden Rohdispersionen, welche vor ihrer Verwendung als Bindemittel einer gründlichen Entgasung unterworfen wurden, so daß der Acrylnitrilgehalt unter der analytischen Nachweisgrenze lag.

Zur Feststoffgehaltsbestimmung (in Gew.-%) wurden Latexproben in Stanniolschälchen 30 Min. im Umluftschrank bei 180 bis 200°C getrocknet. Die auf diese Weise ermittelten Werte stimmten befriedigend mit jenen überein, welche sich beim schonenden Abtrocknen des Wassers bis zur Gewichtskonstanz im Exsiccator über $CaCl_2$ ergaben.

---

*) Zur Vermeidung von Wiederholungen wird der soeben beschriebene Emulgator im folgenden Text mit Emulgator* gekennzeichnet.

Der Begriff »Koagulat« in den folgenden Beispielen bezieht sich auf alle festen Abscheidungen am Rührer, Thermometerstutzen, an der Wand, sowie auf abfiltrierbare Bestandteile, wobei die Dispersionen durch Gewebe aus Polyamid mit einer quadratischen Maschenweite von 60 μm filtriert wurden.

In vielen Fällen wurden Teile des Latex zunächst durch ein Perlongewebe mit einer Maschenweite von 200 μm, danach das Filtrat nochmals durch ein Tuch mit 30 μm Maschenweite filtriert. Das Koagulat wurde sowohl getrocknet (30 Min. bei 180 – 200° C) als auch in feuchter Form gewogen. Teils wurde es in g, teils in % angegeben.

Die angegebenen Koagulatmengen beziehen sich meist auf einen Ansatz und liefern wesentliche Anhaltspunkte für die Brauchbarkeit der einzelnen Verfahren.

Die Wasserstoffionenkonzentration bzw. der pH-Wert wurde mit einem handelsüblichen pH-Meter bestimmt, welches mit Pufferlösungen im sauren und alkalischen Bereich stets kontrolliert wurde. Die Messungen wurden bei Raumtemperatur durchgeführt (vgl. hierzu auch DIN 53 785).

Die Latexteilchengrößen wurden meist mit der Laser-Korrelations-Spektroskopie bestimmt (vgl. D. E. Koppel, Journal of Chemical Physics 57, 1972, 4814 – 4820). Sind zwei Werte angegeben, so wurden diese aus der Winkelabhängigkeit der Lichtstreuung ermittelt (vgl. M. Hofmann, H. Krömer, R. Kuhn, Polymeranalytik I, Thieme Taschenlehrbuch B 4, Georg Thieme Verlag, Stuttgart, 1977, S. 298).

Die Viskosität der Dispersionen wurde bei verschiedenen pH-Werten entweder mit Hilfe des Auslaufbechers nach DIN 53 211 gemessen oder mit Hilfe eines Brookfield-Synchro-Lectric-Viskosimeters, Modell LVF, Präzisionsinstrument der Brookfiled-Engin. Laboratories, Inc., bestimmt. Hierbei wurden die Messungen mit Hilfe der diesem Gerät beigegebenen vier verschiedenen Prüfkörper (PK 1 bis 4) bzw. »spindles 1 – 4« bei verschiedenen Umdrehungsgeschwindigkeiten:

6, 12, 20, 60 UpM

bei einer Temperatur von 22° C durchgeführt.

Da neben dem pH-Wert auch der Feststoffgehalt der Dispersionen in die Viskosität eingeht, ist dieser in Klammer neben den gemessenen cP-Wert gesetzt. Zur Definition der Zähigkeit, gemessen in Centipoise [cP] (vgl. z. B. Bergmann, Schaefer, Lehrbuch der Experimentalphysik Bd. 1, Mechanik, Akustik, Wärme, Walter de Gruyter, Berlin, New York, 1975, SEite 318).

Die Elektrolytbeständigkeit der Dispersionen wurde wie folgt bestimmt:

Zu 25 g in einem Erlenmeyer-Kölbchen befindlichen und mit einem Magnetrührer gut durchmischten Latex wird langsam und tropfenweise aus einer Bürette die betreffende Elektrolytlösung (z. B. 10%ige NaCl-Lösung) hinzugegeben. Mehr als 30 ml der jeweiligen Elektrolytlösung werden nicht hinzugefügt.

Je nach Elektrolytverträglichkeit der jeweiligen Dispersion tritt die Koagulation früher oder später ein. Der Punkt der einsetzenden Koagulation ist in den meisten Fällen gut erkennbar. Als Maß für die Elektrolytbeständigkeit gibt man diejenige ml-Zahl an, bei der die Koagulation einsetzt. Je höher die Zahl der ml, desto höher die Elektrolytbeständigkeit.

Die Wasserfestigkeit der Klarfilme wurde wie folgt beurteilt:

Auf entfetteten Glasplatten (Behandlung mit Chromschwefelsäure und nachfolgend mit dest. Wasser) wurden Naßfilme der Schichtdicke 90 μm mit Hilfe einer Lackhantel aufgezogen.

Wurden auf die Oberfläche des nach 60 Min. bei Zimmertemperatur (ca. 22° C) gebildeten Klarfils sofort 0,4 ml Wasser in Form eines dicken Tropfens gesetzt, so wird diese Wasserbelastung als »Wasserfestigkeit L« oder kurz L bezeichnet.

Erfolgte die Wasserbelastung des luftgetrockneten Filmes erst nach dessen Nachbehandlung im Trockenschrank (15 Min. bei 120° C) und anschließendem 45minütigem Abkühlen auf Zimmertemperatur, so wird dies als »Wasserfestigkeit O« (Ofen) oder kurz O bezeichnet.

Die Benotung der Wasserfestigkeit der mit Wasser belasteten Stellen der Klarfilmoberfläche erfolgt sofort nach dem Abtupfen des Wassers:

a) qualitativ-visuell nach dem Grad der Eintrübung des Klarfilms (Noten 1 – 4)
b) qualitativ-mechanisch durch festes Reiben mit der Kuppe des Mittelfingers (Noten A – D).

Es bedeuten:

1 = starkes Weißanlaufen und starke Trübung
2 = mittlere Trübung
3 = schwache Trübung
4 = klar und unverändert gegenüber dem nicht belasteten Film.

Ferner:

A = Filmauflösung beim Reiben
B = weitgehende Zerstörung beim Reiben

8

**0 012 358**

C = Erweichung
D = feste, zähe Oberfläche; unverändert gegenüber dem nichtbelasteten Film.

Die Note 4 D ist somit die beste; der Film ist dann an der mit Wasser belasteten Stelle klar geblieben und läßt sich durch festes Reiben mit der Mittelfingerkuppe nicht zerstören. Entsprechend ist ein Film mit der Wasserfestigkeit 1 A nach Wasserbelastung stark eingetrübt und läßt sich durch Reiben mit der Fingerkuppe zerkrümeln.

Zur Charakterisierung der Molekülgröße ist der Grenzwert der reduzierten spezifischen Viskosität für verschwindend kleine Polymerkonzentrationen, der STAUDINGER INDEX oder die Grenzviskositätszahl $[\eta]$, dl/g, das verwendete Lösungsmittel und die Temperatur, bei welcher die Messung vorgenommen wurde, angegeben. (Näheres vgl. M. Hofmann, H. Krömer und R. Kuhn Polymeranalytik I, Thieme Taschenbuch der Organischen Chemie, B. 4, Georg Thieme Verlag, Stuttgart, 1977.)

Das Restmonomere Acrylnitril wurde in den Dispersionen wie folgt bestimmt:

Zu 0,5 g Latex fügt man einen Tropfen (ca. 0,02 g) n-Butanol, wiegt sorgfältig aus, verdünnt danach mit reinstem Butyrolacton auf 7,5 ml Gesamtvolumen. Nach einiger Zeit wird die Mischung klar. Die Mischung läßt sich gaschromatographisch analysieren. Injektion: 1 Mikroliter (= 0,001 cm³); Säule: Carbowax 6000 auf Teflon, 2 m Glas; FID-Detektor Temp. Progr. 10°C/min von 70−220°C. Einspritzblock 250°C. Gerät Packard, Type 417.

Die Mindestfilmbildetemperatur, MFT [°C], wurde gemäß DIN 53 787 bestimmt. Es wurden 90 µm dicke Naßfilme der meist ca. 45%igen Dispersion mit einer Lackhantel aufgetragen. Geschwindigkeit des Luftstroms: 0,6 cm/sec; Temperatur der eintretenden Luft: 0°C.

Als gefrierbeständig werden Latices bezeichnet, welche nach einmaligem Einfrieren (= Abkühlen der Dispersion auf ca. −10°C) und anschließendem Auftauen kein Koagulat aufweisen.

## 2. Erfindungsgemäßes Verfahren

### Beispiele (Ansätze A − G)

In Tabelle I sind verschiedene Polymerisationsrezepturen, A−G, angeführt. Die Summe der einzusetzenden Gewichtsanteile aus den einzelnen Komponenten wurde auf 100 (= Gewichtsprozent) normiert, um einen Vergleich zu erleichtern. Es wurden jeweils die 32fachen Mengen der in der Tabelle I angegebenen Gewichtsteile eingesetzt.

Die Herstellung der Dispersion A erfolgt, wie nachstehend beschrieben:

In die unter »1. Erläuterungen« beschriebene 4-Ltr.-Glasapparatur füllt man:

| I | Entionisiertes Wasser | 1 040,45 g |
|---|---|---|
| | Emulgator* | 3,94 g |

| II | n-Butylacrylat | 55,26 g |
|---|---|---|
| | Acrylnitril | 52,96 g |
| | Methacrylsäure | 4,03 g |
| | N-Methoxymethylmethacrylamid | 2,88 g |
| | Zwischensumme Monomere | 115,13 g |

ein.

Das Gemisch wird unter Rühren (250 UpM) in $N_2$-Atmosphäre aufgeheizt, bis eine Temperatur von 60°C erreicht ist.

Dann werden

| III | Kaliumperoxidsulfat, $K_2S_2O_8$, | 1,73 g |
|---|---|---|
| | gelöst in Wasser | 52,35 g |

und

| IV | Natriumpyrosulfit, $Na_2S_2O_5$, | 0,576 g |
|---|---|---|
| | gelöst in Wasser | 52,35 g |

als »Aktivatorspritzen« aus getrennten Behältern gleichzeitig in ca. 5 Sekunden zugesetzt (vorgelegt: Komponenten I bis IV, nachdosiert Komponenten V bis VII).

Die Polymerisation setzt unmittelbar nach den Aktivatorinjektionen ein. Die anfänglich trübe Emulsion aus Monomeren und Wasser wird in einen feinteiligen, nahezu monodispersen Keimlatex übergeführt.

Nach Abklingen der Wärmetönung beginnt die Zudosierung des Monomerengemisches, bestehend aus:

9

| V | n-Butylacrylat | 616,13 g |
|---|---|---|
| | Acrylnitril | 590,43 g |
| | Methacrylsäure | 44,93 g |
| | N-Methoxymethylmethacrylamid | 32,10 g |
| | Zwischensumme | 1 238,59 g |

sowie die der Aktivatorlösung, bestehend aus:

| VI | Wasser | 347,55 g |
|---|---|---|
| | Kaliumperoxidisulfat, $K_2S_2O_8$ | 4,64 g |
| | Emulgator* | 24,06 g |

und die der Pyrosulfitlösung, bestehend aus:

| VII | Wasser | 272,19 g |
|---|---|---|
| | Natriumpyrosulfit, $Na_2S_2O_5$ | 1,44 g |

im Verlaufe von 6 Stunden (= 6 h).

Die lineare Zudosierung wird mit geeigneten Minidosierpumpen bewerkstelligt.

Nach beendetem Zulauf wird bis zur Konstanz des Feststoffgehaltes der Dispersion bei 60°C nachgerührt (ca. 2 Stunden).

Man erhält 3,2 kg Latex mit einem Feststoffgehalt von 44,8 Gew.-% und einem sehr geringen Koagulatanteil (vgl. Tabelle II).

Der Latex besitzt einen Latexteilchendurchmesser von ca. 145 nm und trocknet bei erhöhter Temperatur (MFT 28°C) zu glänzenden, klaren, harten und klebfreien Filmen hoher Festigkeit auf. Das Verfließen und Vernetzen der Latexteilchen wird durch Nacherhitzen (20 Min. 130°C) erleichtert.

Die Gesamtmenge aus Wasser, Monomeren, Emulgator und Initiator,

$$p_{H_2O\,ges.} + p_{Mon.\,ges.} + p_{E\,ges.} + p_{I\,ges.} = 100\ Gew.-\%,$$

setzt sich unter Berücksichtigung der eingeführten Bezeichnungen wie folgt zusammen:

$$p_{H_2O\,ges.} = \underbrace{p_{H_2O\,E\,v} + p_{H_2O\,Ox.v} + p_{H_2O\,Red.v}}_{p_{H_2O\,v\,ges.}} + \underbrace{p_{H_2O\,E\,n} + p_{H_2O\,Ox.n} + p_{H_2O\,Red.n}}_{p_{H_2O\,n\,ges.}}$$

$$= \underbrace{32,514 + 1,636 + 1,636}_{p_{H_2O\,v.ges.}} + \underbrace{10,861 + 8,506}_{p_{H_2O\,n.ges.}} = 55,153$$

$$p_{Mon.ges.} = p_{Mon.v.} + p_{Mon.n.}$$

$$= \underbrace{1,727 + 1,655 + 0,126 + 0,09}_{p_{Mon\,v.}} + \underbrace{19,254 + 18,451 + 1,404 + 1,003}_{p_{Mon.n.}}$$

$$= 3,598 + 40,112 = 43,710$$

$$p_{E.ges.} = p_{E.v.} + p_{E.n.} = 0,123 + 0,752 = 0,875$$

$$p_{I.ges.} = \underbrace{p_{I.v.} + p_{I.n.}}_{} = \underbrace{p_{Ox.v.} + p_{Red.v.} + p_{Ox.n.} + p_{Red.n.}}_{}$$

$$= 0,054 + 0,018 + 0,145 + 0,45 = 0,262$$

Die weiteren Parameter berechnen sich wie folgt:

$$k_{Mon.} = \frac{p_{Mon.v.}}{p_{Mon.v.} + p_{HOH.v.ges.}} \times 100 = \frac{3,598 \times 100}{3,598 + 35,786} = \frac{359,8}{39,384} = 9,13$$

$$[E^*]_v. = \frac{p_{E.v.} \times 1000}{p_{H_2O\,v.ges.}} = \frac{0,123 \times 1000}{35,786} = 3,44$$

$$[I]_v. = \frac{p_{I.v.} \times 1000}{p_{H_2O\,v.ges.}} = \frac{(p_{Ox.v.} + p_{Red.v.}) \times 1000}{p_{H_2O\,v.ges.}} = \frac{(0,054 + 0,018) \times 1000}{35,786} = 2,01$$

$$k_1 = \frac{p_{Red.v.} + p_{Red.n.}}{p_{Ox.v.} + p_{Ox.n.}} = \frac{0,018 + 0,045}{0,054 + 0,145} = \frac{0,063}{0,199} = 0,316$$

$$V_{Mon.} = \frac{p_{Mon.v.}}{p_{Mon.ges.}} \times 100 \frac{3,598 \times 100}{43,710} = 8,23$$

Die Parameter für den erfindungsgemäßen Ansatz A sind in Tabelle I, Fortsetzung, zusammengefaßt. Analog berechnen sich die Parameter für die erfindungsgemäßen Versuche B – G, die ebenfalls aus Tabelle I, Fortsetzung, ersichtlich sind.

In einer dem Versuch A analogen Arbeitsweise werden die in Tabelle II angeführten Dispersionen B bis G hergestellt.

Die Zusammensetzung der Monomerengemische ändert sich von Ansatz zu Ansatz innerhalb der Grenzen des Anspruches (vgl. Tabelle I). Wie Tabelle II zeigt, unterschieden sich die Dispersionen A – G charakteristisch in der Mindestfilmbildetemperatur MFT (°C), gemessen nach DIN 53 787, oberhalb welcher die jeweilige Dispersion zu klaren Filmen auftrocknet. Mit zunehmendem n-Butylacrylat-Anteil sinkt die MFT ab. Parallel zur MFT fällt auch die Härte der aus den Dispersionen A – G gegossenen Filme ab. Als Maß für die Härte wurde die Pendelhärte nach König (nach DIN 53 157) benutzt.

Die Shore-Härte der Produkte, ihr Zugfestigkeits- und Dehnungsverhalten in Abhängigkeit von der Meßtemperatur wird an anderer Stelle noch behandelt.

Die Dispersionen besitzen Teilchengrößen (Latexteilchendurchmesser) von etwa 110 – 145 nm. Die Latexteilchendurchmesserverteilung ist hierbei sehr eng, wie elektronenmikroskopische Untersuchungen bestätigten.

Während die auf pH = 7 (t = 22°C) eingestellten Dispersionen sich in der Auslaufzeit im Auslaufbecher nach DIN 53 211 (4-mm-Düse) kaum unterscheiden, tritt bei weiterer Zugabe von wäßrigem Ammoniak (Lösung von $NH_3$ in Wasser, 10 Gew.-%) eine merkliche Differenzierung im Fließverhalten ein.

Bei pH = 8,5 sind die Dispersionen A – D deutlich verdickt, laufen aber noch durch die 4-mm-Düse des Auslaufbechers. Die Dispersionen E, F und G sind viskoser und laufen nur noch durch die 6- bzw. 8-mm-Düse.

Die Dispersionen A – G sind im alkalisierten Zustand (pH = 8 – 8,5) scherstabil. Sie können ohne Koagulatbildung mit einem Schnellrührer (Klaxonrährer, Type HM 5 UB, der Firma Klaxon Ltd., Warwick Road, Birmingham) bei 14 000 UpM, ∅ 20 mm, 20 Min. behandelt werden.

Sie lassen sich ferner bei pH-Werten ab 7 einfrieren und zeigen nach dem Auftauen kein Koagulat.

Ein Zusatz von 10%iger Kochsalzlösung oder 2,5%iger $CaCl_2$-Lösung im Volumen-Verhältnis 1 Teil Dispersion zu 1 Teil Elektrolytlösung zu den auf pH = 8 eingestellten Dispersionen führt weder sofort noch nach Stehenlassen über Nacht zur Koagulatbildung und beweist eine hohe Elektrolytstabilität.

Zur Verwendung dieser Dispersionen als Bindemittel für Anstrichfarben siehe den anwendungstechnischen Teil dieser Anmeldung.

Tabelle I

| | | Ansätze | | | | | | |
| | | A | B | C | D | E | F | G |
|---|---|---|---|---|---|---|---|---|
| **Komponenten in Gew.-Tln eingesetzt** | | | | | | | | |
| I | Entionisiertes Wasser | 32,514 | 33,200 | 33,159 | 33,202 | 31,865 | 33,209 | 33,143 |
| | Emulgator (100% WAS) | 0,123 | 0,156 | 0,133 | 0,218 | 0,153 | 0,218 | 0,133 |
| II | n-Butylacrylat | 1,727 | 2,067 | 2,233 | 2,294 | 4,013 | 2,482 | 2,413 |
| | Acrylnitril | 1,655 | 1,439 | 1,184 | 1,218 | 1,292 | 0,936 | 0,914 |
| | Styrol | 0,0 | 0,0 | 0,0 | 0,0 | 1,292 | 0,0 | 0,0 |
| | Methacrylsäure | 0,126 | 0,073 | 0,146 | 0,146 | 0,275 | 0,146 | 0,146 |
| | Acrylsäure | 0,0 | 0,073 | 0,0 | 0,0 | 0,0 | 0,0 | 0,0 |
| | N-Methoxymethylmethacrylamid | 0,090 | 0,0 | 0,091 | 0,0 | 0,0 | 0,091 | 0,183 |
| III | Entionisiertes Wasser | 1,636 | 1,646 | 1,646 | 1,646 | 1,646 | 1,646 | 1,646 |
| | $K_2S_2O_8$ reinst | 0,054 | 0,054 | 0,054 | 0,054 | 0,054 | 0,054 | 0,054 |
| IV | Entionisiertes Wasser | 1,636 | 1,646 | 1,646 | 1,646 | 1,646 | 1,646 | 1,646 |
| | $Na_2S_2O_5$ | 0,018 | 0,018 | 0,018 | 0,018 | 0,018 | 0,018 | 0,018 |
| V | n-Butylacrylat | 19,254 | 23,076 | 24,896 | 25,543 | 22,732 | 27,658 | 26,904 |
| | Acrylnitril | 18,451 | 16,064 | 13,202 | 13,565 | 7,318 | 10,428 | 10,191 |
| | Styrol | 0,0 | 0,0 | 0,0 | 0,0 | 7,318 | 0,0 | 0,0 |
| | Methacrylsäure | 1,404 | 0,815 | 1,629 | 1,629 | 1,557 | 1,629 | 1,631 |

0 012 358

Fortsetzung

| | Ansätze | | | | | | |
|---|---|---|---|---|---|---|---|
| | A | B | C | D | E | F | G |
| Acrylsäure | 0,0 | 0,815 | 0,0 | 0,0 | 0,0 | 0,0 | 0,0 |
| N-Methoxymethylmethacrylamid | 1,003 | 0,0 | 1,019 | 0,0 | 0,0 | 1,018 | 2,038 |
| VI Entionisiertes Wasser | 10,861 | 9,637 | 9,723 | 9,637 | 9,637 | 9,637 | 9,722 |
| $K_2S_2O_8$ reinst | 0,145 | 0,178 | 0,178 | 0,178 | 0,178 | 0,178 | 0,178 |
| Emulgator (100% WAS) | 0,752 | 0,757 | 0,757 | 0,720 | 0,720 | 0,720 | 0,757 |
| VII Entionisiertes Wasser | 8,506 | 8,227 | 8,227 | 8,227 | 8,227 | 8,227 | 8,224 |
| $Na_2S_2O_5$ | 0,045 | 0,059 | 0,059 | 0,059 | 0,059 | 0,059 | 0,059 |
| Summe aller Komponenten | 100 | 100 | 100 | 100 | 100 | 100 | 100 |
| Dosierdauer (h) V, VI, VII: | 6 | 5 | 5 | 5 | 6 | 5 | 5 |
| Polymerisationstemperatur °C: | 60 | 50 | 50 | 55 | 60 | 60 | 50 |
| $p_{H_2O\ ges}$; vergl. Anspruch 1, Ia | 55,153 | 54,356 | 54,401 | 54,358 | 53,021 | 54,365 | 54,381 |
| $p_{Mon.\ ges}$; vergl. Anspruch 1, Ib | 43,710 | 44,422 | 44,400 | 44,395 | 45,797 | 44,388 | 44,420 |
| $p_{E.\ ges.}$; vergl. Anspruch 1, Ic | 0,875 | 0,913 | 0,890 | 0,938 | 0,873 | 0,938 | 0,890 |
| $p_{I.\ ges}$; vergl. Anspruch 1, Id | 0,262 | 0,309 | 0,309 | 0,309 | 0,309 | 0,309 | 0,309 |
| $k_{Mon.}$; vergl. Anspruch 1, IIa | 9,13 | 9,13 | 9,11 | 9,50 | 17,02 | 9,10 | 9,10 |
| $[E^*]_v.$; vergl. Anspruch 1, IIb | 3,44 | 4,27 | 3,65 | 6,26 | 4,57 | 5,97 | 3,65 |
| $[I]_v.$; vergl. Anspruch 1, IIc | 2,01 | 1,97 | 1,97 | 2,06 | 2,15 | 1,97 | 1,98 |
| $k_{I.}$; vergl. Anspruch 1, IId | 0,32 | 0,32 | 0,32 | 0,32 | 0,32 | 0,32 | 0,32 |
| $v_{Mon.}$; vergl. Anspruch 1, IIe | 8,23 | 6,72 | 8,23 | 8,23 | 15,0 | 8,23 | 8,23 |

Tabelle II

| | Dispersion | | | | | | |
|---|---|---|---|---|---|---|---|
| | A | B | C | D | E | F | G |
| Polymerisatzusammensetzung: % | | | | | | | |
| n-Butylacrylat | 48,0 | 56,6 | 61,1 | 62,7 | 58,4 | 67,9 | 66,0 |
| Acrylnitril | 46,0 | 39,4 | 32,4 | 33,3 | 18,8 | 25,6 | 25,0 |
| Styrol | – | – | – | – | 18,8 | – | – |
| Methacrylsäure | 3,5 | 2,0 | 4,0 | 4,0 | 4,0 | 4,0 | 4,0 |
| Acrylsäure | – | 2,0 | – | – | – | – | – |
| N-Methoxymethylmethacrylamid | 2,5 | – | 2,5 | – | – | 2,5 | 5,0 |
| Feststoffgehalt Rohlatex: % Ausbeute Latex ca. 3200 g | 44,8 | 45,3 | 45,2 | 45,4 | 46,7 | 45,4 | 45,4 |
| Restmonomeres Acrylnitril im Rohlatex % (n. GC) | 0,1 | 0,07 | 0,2 | 0,09 | 0,08 | 0,07 | 0,2 |
| Koagulat in g nach Filtration durch 60 μ Tuch, getrocknet 30 min bei 180–200°C | 2,9 | 0,3 | 0,6 | 2,8 | 1,5 | 1,0 | 1,2 |
| Teilchengröße aus Lichtstreuung (nm) | 147 | 130 | 138 | 115 | 125 | 104 | 117 |
| Mindestfilmbildetemperatur nach DIN 53 787 (°C) | 28 | 19 | 15 | 10 | 15 | 3 | 8 |
| Pendelhärte von Klarfilmen (75μ Stärke) nach König; vergl. DIN 53 157 (sec) | 145 | 110 | 75 | 35 | 42 | 20 | 35 |
| pH-Wert Rohlatex | 5,5 | 4,2 | 4,8 | 5,0 | 4,8 | 4,8 | 5,1 |
| Auslaufzeit in sec nach DIN 53 211 nach Einstellung auf | | | | | | | |
| pH 7 | 14 | 14 | 15 | 14 | 15 | 15 | 15 |
| pH 7,5 | | | | 16 | | 17 | |

Fortsetzung

|  | Dispersion | | | | | | |
|---|---|---|---|---|---|---|---|
|  | A | B | C | D | E | F | G |
| pH 8,0 | 17 | 22 |  | 18 |  | 21 | 22 |
| pH 8,5 | 25 | 40 | 37 | 27 | 20*) | 17*) | 13**) |

Wasserfestigkeit 0

| | A | B | C | D | E | F | G |
|---|---|---|---|---|---|---|---|
| Film aus Latex mit pH | 5,5 | 4,2 | 4,8 | 5,0 | 4,8 | 4,8 | 5,1 |
| Note | 4 C | 4 C | 4 C | 4 C | 4 C | 4 B | 4 B |
| Film aus Latex mit pH | 8,0 | 8,0 | 8,0 | 8,0 | 8,0 | 8,0 | 8,0 |
| Note | 4 D | 4 D | 4 D | 4 D | 4 D | 4 C | 4 C |

Elektrolytstabilität:

25 g Latex bei pH des Rohlatex

| | A | B | C | D | E | F | G |
|---|---|---|---|---|---|---|---|
| +10%ige wäßrige NaCl-Lösung koaguliert nach ml | 8 | 6 | 8 | 5 | 6 | 7 | 8 |
| +10%ige wäßrige CaCl$_2$-Lösung koaguliert nach ml | 3 | 2 | 3 | 2 | 3 | 2 | 3 |

25 g Latex, pH = 8

| | A | B | C | D | E | F | G |
|---|---|---|---|---|---|---|---|
| +10%ige wäßrige NaCl-Lösung koaguliert nach ml | 30 | 30 | 30 | 30 | 30 | 30 | 30 |
| +10%ige wäßrige CaCl$_2$-Lösung koaguliert nach ml | 10 | 9 | 9,5 | 8 | 10 | 9 | 10 |

*) 6 mm ⌀ Düse    sonst:
**) 8 mm ⌀ Düse    4 mm ⌀ Düse

### 2. Vergleichsversuch I

Beispiel IV der US-Patentschrift 2 787 603 wird nach dem in Beispiel I der US-Patentschrift angegebenen Verfahren genau wiederholt, mit der Änderung, daß ca. die 8,6fachen Mengen an Ausgangsmaterialien verwendet wurden.

Die Polymerisation wurde unter Stickstoff durchgeführt, das Wasser in der Polymerisationsapparatur im Stickstoffstrom ausgekocht.

Der Emulgator (Natriumlaurylsulfat) wurde bei 65,6°C (= 150°F) zum ausgekochten Wasser zugegeben, dann das Natriumpyrosulfit, danach das Monomerengemisch zugefügt, und schließlich kam das Kaliumpersulfat als wäßrige (gesättigte) Lösung hinzu.

Das wäßrige Polymerisationsgemisch wurde 2 Std. auf 60°C (140°F) gehalten, bis die Polymerisation beendet war.

Die heiße Dispersion wurde durch Durchblasen von Luft (ca. 1 Std. bei 80°C) von Restmonomeren befreit.

| | |
|---|---|
| Feststoffgehalt der Dispersion | 33%; pH-Wert 3,8 |
| Koagulatmenge | 3,4 g |
| Latexteilchendurchmesser | 96 nm |
| Restmonomeres ACN n. GC vor Entgasung | 0,26% |
| Restmonomeres ACN n. GC nach Entgasung | 0,079% |

Setzt man zu dieser Dispersion ca. 10%iges Ammoniakwasser unter gutem Rühren langsam hinzu, so tritt ab pH = 7,5 eine Verdickung bis zur zähen Pastenkonsistenz (pH = 8,5) ein. Diese Eigenschaft ist für die in vorliegender Anmeldung konzipierten Anwendungsgebiete ebenso unerwünscht wie der niedrige Feststoffgehalt der Dispersion von nur 33%.

Anwendungstechnische Prüfung dieser Dispersion siehe anwendungstechnischen Teil.

Wir ermitteln nun die Parameter des Verfahrens gemäß Beispiel der US-Patentschrift aufgrund der Angaben in dieser Schrift und vergleichen sie mit den Parametern des erfindungsgemäßen Verfahrens.

Parameter

| Gemäß Beispiel IV und I der US-Patentschrift 2 787 603 | | Gemäß erfindungsgemäßen Verfahren |
|---|---|---|
| 1. $p_{H_2O\ ges.}$ | 66,467 Gew.-% (= $p_{H_2O\ v.\ ges.}$, da Batch-Ansatz) | 48,4—59,7 Gew.-% |
| 2. $p_{Mon.\ ges}$ | 33,234 Gew.-% | 40,0—50,0 Gew.-% |
| 3. $p_{E.\ ges.}$ | 0,166 Gew.-% | 0,25—2,0 Gew.-% |
| 4. $p_{I.\ ges.}$ | 0,133 Gew.-% | 0,025—0,4 Gew.-% |

Summe der Komponenten 1 bis 4 = 100%

| Gew.-% n-Butylacrylat: | 65 | | 47,5—70,5 |
|---|---|---|---|
| Gew.-% Acrylnitril: | 30 | eingesetzt Summe 100% | 20,0—48,0 |
| Gew.-% Methacrylsäure: | 5 | | 3,5—4,5 |

$k_{Mon.} = 33,3$ 5—20

$$\frac{(9,97 + 21,602 + 1,662) \times 100}{(9,97 + 21,602 + 1,662 + 66,467)} = 33,33$$

$[E]_v. = 2,5$ 2—40

$$\frac{0,166 \times 1000}{66,467} = 2,497$$

$[I]_v. = 2,0$ 0,5—4,—0

$$\frac{(0,033 + 0,10) \times 1000}{66,467} = 2,001$$

$k_I. = 0,33$ 0,0—4,0

$$\frac{0,033}{0,100} = 0,33$$

$v_{Mon.} = 100$ 6—15

$$\frac{33,234}{33,234} \times 100 = 100$$

Es liegen demnach: $p_{H_2O\ ges.}$, $p_{Mon.\ ges.}$, $p_{E.\ ges.}$, $k_{Mon.}$, $v_{Mon.}$, der Methacrylsäureanteil und die Art des Emulgators beim Verfahren der US-Patentschrift 2 787 603 außerhalb des beanspruchten Bereiches der vorliegenden Anmeldung.

In Tabelle III sind unter Spalte I alle Komponenten, die gemäß Beispiel IV der US-Patentschrift 2 787 603 im Polymerisationsprozeß eingesetzt werden, in Gew.-% angegeben. In Spalte I A sind die gleichen Komponenten in Gramm angegeben, wobei als Emulgator Natriumlaurylsulfat eingesetzt wurde. Spalte I B entspricht Spalte I A mit der Änderung, daß anstelle von Natriumlaurylsulfat ein erfindungsgemäßer Emulgator, wie unter 1. Erläuterungen angegeben, verwendet wird. In Tabelle III, Fortsetzung 1, sind die Polymerisationsparameter angegeben und in Tabelle III, Fortsetzung 2, die Eigenschaften der Dispersionen, die gemäß Beispiel IV der US-Patentschrift mit Natriumlaurylsulfat (Spalte I A) bzw. erfindungsgemäßem Emulgator (Spalte I B) hergestellt wurden.

Es ist ersichtlich, daß gemäß der Verfahrensweise des Beispiels IV der US-Patentschrift Latices mit relativ niedrigen Festgehalten (ca. 33%) anfallen. Der Koagulatanteil ist gering. Bei Zugabe von wäßrigem, 10%igen $NH_3$ verdicken die Latices sehr stark und sind bei einem pH von 8,5 nicht mehr frei

fließend, sondern zähe Pasten, aus denen sich keine Filme ziehen lassen.

Aus den Rohlatices, die etwa pH-Werte von 3,4−4 aufweisen, lassen sich zwar Filme ziehen, sie besitzen jedoch eine schlechtere Wasserfestigkeit O als Filme aus den erfindungsgemäßen Dispersionen. Auch sind sie nicht gefrierbeständig. Selbst die Verwendung des erfindungsgemäß einzusetzenden Emulgators in Beispiel 4 der US-Patentschrift bringt keine Vorteile.

## 2. Vergleichsversuch II

Das Beispiel IV der US-Patentschrift 2 787 603 = Vergleichsversuch I wird nun so modifiziert, daß die Parameter $p_{H_2O\,ges.}$ und $p_{Mon.\,ges.}$ unter den Anspruch 1 der vorliegenden Anmeldung fallen. $p_{H_2O\,ges.}$ wird auf den Wert 55 und $p_{Mon.\,ges.}$ auf 44,6 eingestellt. Insgesamt haben die Parameter folgende Werte:

| Beispiel IV und I der US-PS 2 787 603 | Erfindung |
| --- | --- |
| $p_{H_2O\,ges.} = 55{,}0$ in Gew.-% | 48,4−59,7 Gew.-% |
| $p_{Mon.\,ges.} = 44{,}597$ in Gew.-% | 40,0−50,0 Gew.-% |
| $p_{E.\,ges.} = 0{,}233$ Gew.-% | 0,25−2,0 Gew.-% |
| $p_{I.\,ges.} = 0{,}179$ Gew.-% | 0,025−0,4 Gew.-% |
| $k_{Mon.} = 44{,}78$ | 5−20 |
| $[E]_v = 4{,}054$ | 2−40 |
| $[I]_v = 3{,}254$ | 0,5−4,0 |
| $k_I = 0{,}33$ | 0−4 |
| $v_{Mon.} = 100$ | 2−15 |

Es ist ersichtlich, daß lediglich nur noch die Parameter $p_{E.\,ges.}$, $k_{Mon.}$ und $v_{Mon.}$ außerhalb des Anspruchs der vorliegenden Erfindung liegen. Im Vergleichsversuch II C wird Natriumlaurylsulfat als Emulgator eingesetzt. Vergleichsversuch II D unterscheidet sich von Vergleichsversuch II C nur dadurch, daß ein erfindungsgemäßer Emulgator anstelle von Natriumlaurylsulfat verwendet wird.

In Tabelle III sind in Spalte II alle Komponenten, die in den Vergleichsversuchen II C und II D eingesetzt wurden, in Gew.-% angegeben. In Spalte II C sind die Komponenten des Vergleichsversuches II C bzw. in Spalte II D die des Vergleichsversuches II D in Gramm angegeben. Aus Tabelle III, Fortsetzung 1 sind unter II C bzw. II D die Polymerisationsparameter der entsprechenden Vergleichsversuche ersichtlich, und in Tabelle III, Fortsetzung 2, Eigenschaften der Latices bzw. der Filme aus den Vergleichsversuchen II C und II D.

Die Polymerisation wird wie in Vergleichsversuch I durchgeführt.

Im Verlauf einer stark exothermen Reaktion, deren Temperatur mit Hilfe einer elektronischen Regelung jedoch exakt konstant gehalten werden kann, entstehen scherempfindliche, im Falle der Verwendung von Natriumlaurylsulfat als Emulgator große Mengen an Koagulat enthaltende Latices.

Im wesentlichen werden bei den Dispersionen II C und II D die gleichen Nachteile wie bei Dispersionen aus den Vergleichsversuchen I A und I B erhalten. Die Verwendung des erfindungsgemäßen Emulgators im Vergleichsbeispiel II C bringt zwar weniger Koagulat, einen höheren Festgehalt und eine leicht verbesserte Elektrolyt- und Pigmentbeständigkeit, jedoch verdicken diese Dispersionen bei Zusatz von 10%igem wäßrigem $NH_3$ noch stärker als die Dispersionen aus den Vergleichsversuchen I A und I B.

Tabelle III

| Zeile | Komponenten, Parameter Vergleichsversuch | I Gew.-% | I A g | I B g | II Gew.-% | II C g | II D g |
|---|---|---|---|---|---|---|---|
| 1 | Entionisiertes Wasser, $O_2$ frei | 66,467 | 1728,14 | 1728,14 | 55,001 | 1430,03 | 1430,03 |
| 2 | $Na_2S_2O_5$, Natriumpyrosulfit | 0,033 | 0,86 | 0,86 | 0,045 | 1,17 | 1,17 |
| 3 | Natriumlaurylsulfat | s. Zeile 9 | 4,32 | — | s. Zeile 9 | 5,80 | — |
| 4 | Emulgator* (gem. vorl. Erfindung) | dto. | — | 4,32 | s. Zeile 9 | — | 5,80 |
| 5 | Acrylnitril | 9,970 | 259,22 | 259,22 | 13,379 | 347,85 | 347,85 |
| 6 | n-Butylacrylat | 21,602 | 561,65 | 561,65 | 28,988 | 753,69 | 753,69 |
| 7 | Methacrylsäure | 1,662 | 43,21 | 43,21 | 2,230 | 57,98 | 57,98 |
| 8 | $K_2S_2O_8$ Kaliumperoxidisulfat | 0,100 | 2,6 | 2,6 | 0,134 | 3,48 | 3,48 |
| 9 | Gew.-% Emulgator Na-laurylsulfat od. Emulgator* | 0,166 | — | — | 0,223 | — | — |
| 10 | Summe | 100 | 2600 | 2600 | 100 | ~2600 | ~2600 |
| 11 | | | | | | | |
| 12 | Polymerisationstemperatur (Latex) °C | | 60 | 60 | | 60 | 60 |
| 13 | Polymerisationsdauer (h) | | 2 | 2 | | 2 | 2 |
| | % Acrylnitrileinheiten im Copolymerisat | | 30 | 30 | | 30 | 30 |
| | % n-Butylacrylateinheiten im Copolymerisat | | 65 | 65 | | 65 | 65 |
| | % Methacrylsäureeinheiten im Copolymerisat | | 5 | 5 | | 5 | 5 |
| | $p_{H_2O\,ges.}$; vergl. Anspruch 1, Ia | | 66,467 | 66,467 | | 55,00 | 55,00 |
| | $p_{Mon.\,ges.}$; vergl. Anspruch 1, Ib | | 33,234 | 33,234 | | 44,597 | 44,597 |
| | $p_{E.\,ges.}$; vergl. Anspruch 1, Ic | | 0,166 | 0,166 | | 0,223 | 0,223 |
| | $p_{I.\,ges.}$; vergl. Anspruch 1, Id | | 0,133 | 0,133 | | 0,179 | 0,179 |

0 012 358

Fortsetzung

| Zeile | Komponenten, Parameter Vergleichsversuch | I Gew.-% | I A g | I B g | II Gew.-% | II C g | II D g |
|---|---|---|---|---|---|---|---|
| | $k_{Mon.}$; vergl. Anspruch 1, IIa | | 33,3 | 33,3 | | 44,78 | 44,78 |
| | $[E]_v$; vergl. Anspruch 1, IIb | | 2,5 | 2,5 | | 4,054 | 4,054 |
| | $[I]_v$; vergl. Anspruch 1, IIc | | 2,0 | 2,0 | | 3,254 | 3,254 |
| | $k_I$; vergl. Anspruch 1, IId | | 0,33 | 0,33 | | 0,33 | 0,33 |
| | $v_{Mon.}$; vergl. Anspruch 1, IIe | | 100 | 100 | | 100 | 100 |
| | Feststoffgehalt Rohlatex %; pH-Wert Ausbeute Latex in g | | 33/3,8 ca. 2590 | 32,7/3,8 ca. 2580 | | ca. 40/3,8 ca. 2100 | 43,5/3,9 ca. 2450 |
| | Koagulat in g, nach Filtration durch 60 $\mu$m Tuch, getrocknet 30 min bei 180–200°C | | 3,4 | 8,0 | | ca. 250 | 71 |
| | Restmonomeres ACN, Rohlatex, % n. GC | | 0,26 | 0,25 | | 0,56 | 0,29 |
| | Auslaufzeit des Latex bei pH = 8,5 nach DIN 53 211 4 mm $\varnothing$, 6 mm $\varnothing$ und 8 mm $\varnothing$ Düse | | nicht meßbar | nicht meßbar | | nicht meßbar | nicht meßbar |
| | Elektrolytstabilität: 25 g Rohlatex, pH | | 3,8 | 3,8 | | 3,8 | 3,9 |
| | + 10%ige wäßrige NaCl-Lösung, koaguliert nach Zugabe von ml | | 2 | 5 | | 2 | 5 |
| | + 10%ige wäßrige CaCl$_2$-Lösung, koaguliert nach Zugabe von ml | | 0,5 | 0,5 | | 0,5 | 2 |
| | Wasserfestigkeit 0, Note | | 4 B | 4 B | | 4 B | 4 B |
| | Film aus Latex mit pH | | 3,4 | 3,9 | | 3,8 | 3,9 |
| | Teilchengröße Endlatex nm aus Lichtstreuung | | 96 | 100 | | 161 | 155 |
| | Gefrierbeständigkeit pH / + od. − − = nicht gefrierbeständig | | 3,8/− | 3,9/− | | 3,8/− | 3,9/− |

0 012 358

**0 012 358**

## 2. Vergleichsversuch III

Die bisherigen Vergleichsversuche demonstrieren, daß weder nach der Lehre der US-Patentschrift 2 787 603 (Beispiel IV + I der US-PS = Vergleichsversuch I A) noch gemäß den Vergleichsversuchen I B, II C und II D, in denen Beispiel IV + I der US-Patentschrift im Sinne der Lehre der vorliegenden Anmeldung durch Angleichen einzelner, aber nicht aller Polymerisationsparameter an die beanspurchten Polymerisationsparameter der vorliegenden Erfindung modifiziert wurde, Latices mit einem Feststoffgehalt über 40 Gew.-% erhalten werden können, welche gleichzeitig einen geringen Koagulatanteil, eine gute Elektrolytbeständigkeit, bestimmte Teilchendurchmesser aufweisen und nach Zusatz von 10 bis 25%igem wäßrigen $NH_3$ verdicken, aber gießfähig bleiben und wasserfeste, glänzende Filme nach der Trocknung ergeben.

Vergleichsversuche I B und II D verdeutlichen ferner, daß auch der Ersatz des Emulgators Natriumlaurylsulfat durch den erfindungsgemäßen Emulgator keine bzw. keine nennenswerten Vorteile erbringt, wenn nur einige der übrigen Polymerisationsparameter mit entsprechenden der vorliegenden Erfindung übereinstimmen.

In den nun folgenden Vergleichsversuchen werden schrittweise weitere Polymerisationsparameter mit den erfindungsgemäß beanspruchten in Übereinstimmung gebracht, und zwar in Vergleichsversuch III A der Paramter $p_{E. ges.}$, in III B zusätzlich der Parameter $k_{Mon.}$, in III C zuästzlich der Parameter $v_{Mon.}$ (jedoch liegt Parameter $[I]_v$ wieder außerhalb der erfindungsgemäßen Grenzen), in III D liegen alle Polymerisationsparameter innerhalb der erfindungsgemäßen Grenzen, ausgenommen die Art des Emulgators (Natriumlaurylsulfat statt erfindungsgemäßer Emulgator) und die Menge an eingebauter Methacrylsäure (5% statt 3,5–4,5%). Im Vergleichsversuch III E ist Vergleichsversuch III D dahingehend modifiziert worden, daß der Methacrylsäureanteil noch außerhalb der beanspruchten Grenzen liegt, aber der erfindungsgemäße Emulgator verwendet wird. Vergleichsversuch F ist ein Beispiel gemäß vorliegender Erfindung, da gegenüber Vergleichsversuch III E auch noch der Anteil an eingebauter Methacrylsäure (4%) innerhalb der in der vorliegenden Anmeldung beanspruchten Grenzen liegt.

Zur besseren Übersicht seien zunächst die wesentlichen Polymerisationsparameter gegenübergestellt:

| Vergleich | III A | III B | III C | III D | III E | Parameter gemäß Erfindung |
|---|---|---|---|---|---|---|
| Methacrylsäure, % | 5 | 5 | 5 | 5 | 5 | 3,5–4,5 |
| $p_{H_2O\ ges.}$ | 54,57 | 54,57 | 54,57 | 54,57 | 54,57 | 48,4–59,7 |
| $p_{Mon.\ ges.}$ | 45 | 45 | 45 | 45 | 45 | 40–50 |
| $p_{E.\ ges.}$ | 0,25 | 0,25 | 0,25 | 0,25 | 0,25 | 0,25–2 |
| $p_{I.\ ges.}$ | 0,18 | 0,18 | 0,18 | 0,18 | 0,18 | 0,025–0,4 |
| $k_{Mon.}$ | 45,2 | 10 | 10 | 10 | 10 | 5–20 |
| $[E]_v$ | 4,58 | 4,58 | 4,57 | 2,5 | 2,5 | 2–40 |
| $[I]_v$ | 3,3 | 3,3 | 5,2 | 1,2 | 1,2 | 0,5–4,0 |
| $k_I$ | 0,3 | 0,3 | 0,3 | 0,3 | 0,3 | 0–4 |
| $v_{Mon.}$ | 100 | 13,5 | 8,5 | 8,5 | 8,5 | 2–12 |
| Natriumlaurylsulfat | × | × | × | × | | |
| Erfindungsgem. Emulgator | | | | | × | × |

Vergleichsversuch F = Beispiel gemäß Erfindung
entspricht Vergleichsbeispiel III E mit 4 Gew.-% eingebauter Methacrylsäure.

Beim Vergleichsversuch III A wird nach der Arbeitsweise der US-Patentschrift 2 787 603 — Beispiel IV und I — Wasser, Natriumlaurylsulfat, Natriumpyrosulfit und das gesamte Monomerengemisch vorgelegt (I, Batch-Verfahren) und die Polymerisation nach dem Aufheizen auf 60°C durch Zugabe der Persulfatlösung II gestartet. Bei allen Batch-Verfahren ist $v_{Mon.} = 100$.

Die Polymerisation erfolgt in allen Vergleichsversuchen in der unter 1. Erläuterungen beschriebenen 4-Ltr.-Glasapparatur. Es werden jeweils die 30fachen Mengen der in Tabelle IV angegebenen Gewichtsprozente eingesetzt. Die jeweiligen Summen der in Tabelle IV angegebenen Gewichtsprozente der Komponenten (I) bis (VI) ist 100.

Die Polymerisation in Vergleich III A setzt unmittelbar nach der Persulfatspritze II ein. Zur Aufrechterhaltung der Innentemperatur im Kolben (gemessen im Latex) stellt der elektronische Regler die Temperatur des gut isolierten Außenbades durch Kaltwasserinjektionen in Abhängigkeit von der Zeit wie folgt ein:

| Zeit (min.) | Innentemperatur (°C) | Außentemperatur (°C) |
|---|---|---|
| 0 | 60,0 | 62 (Persulfatspritze) |
| 10 | 60,1 | 52 |
| 20 | 60,2 | 48 |
| 30 | 60,0 | 43 |
| 40 | 60,0 | 47 |
| 50 | 60,0 | 49 |
| 60 | 60,0 | 52 |
| 70 | 60,0 | 56 |
| 80 | 60,0 | 58 |
| 90 | 60,0 | 60 |

Nach ca. 90 Min. muß der Versuch wegen Klumpen- und Koagulatbildung an den Rührerflügeln und der Thermostutzenhülse abgestellt werden. Aus der starken Wärmtönung und der Koagulatbildung folgt, daß derartige Ansätze für die Übertragung in großtechnischen Maßstab ungeeignet sind. Weitere Einzelheiten sind den Tabellen IV und IV/Fortsetzung 1 bis 3 zu entnehmen.

Ab Vergleichsversuch III B wird vom Batch-Prozeß abgegangen. Es wird im Vergleich III B nur ein Teil (siehe Tabelle IV) des Monomerengemisches vorgelegt und nach Initiierung der Polymerisation mit der Persulfatlösung II der Rest des Monomerengemisches, IV, im Verlaufe von 2 Stunden unter Aufrechterhaltung einer Innentemperatur von 60°C nachdosiert. Der Regler stellt bei dieser Verfahrensweise eine nahezu konstante Differenz zwischen Innen- und Badtemperatur ein, welche ca. 4°C beträgt.

80 Minuten nach Beendigung der Zugabe von IV ist keine Wärmetönung mehr feststellbar.

Beim Vergleichsversuch III C (siehe Tabelle IV) wird noch weniger Wasser, Emulgator- und Monomerengemisch vorgelegt, das Monomeren-/Wasser-Verhältnis $k_{Mon.}$ und die Emulgatorkonzentration $[E]_v$ in der Wasservorlage aber aufrechterhalten.

Die Zudosierung des Hauptanteils der Monomeren IV erfolgt nach der Initiierung mit der Persulfatlösung II gleichzeitig mit der Emulgatorlösung V, im Verlauf von 5 Std.

Danach rührt man zur Vervollständigung des Monomerenumsatzes noch 3 Std. bei 60°C nach. Diese Verfahrensweise eignet sich auch für die Übertragung in den großen Maßstab (z. B. 10 000-Ltr.-Rührkessel).

Beim Vergleichsversuch III D (siehe Tabelle IV) wird — unter sonst gleichen Bedingungen wie in Vergleichsversuch III C — die Emulgator- und Initiatorkonzentration der Vorlage erniedrigt und der restliche Anteil an Emulgator, Initiator im Verlauf von 5 Std., gemeinsam mit dem Monomerengemisch IV, zudosiert und danach 3 Std. bei 60°C nachpolymerisiert.

Vergleichsversuch III E und Vergleichsversuch F (=Beispiel gemäß Erfindung) werden wie Vergleichsversuch III D durchgeführt.

In Tabelle IV sind die verwendeten Komponenten in Gewichtsprozent angegeben (Summe = 100). Es werden die 30fachen Gewichtsmengen eingesetzt. In Tabelle IV/Fortsetzung 1 sind die Monomereinheiten im Copolymerisat in Gew.-% und weitere Polymerisationsparameter der einzelnen Vergleichsversuche gegenübergestellt, und aus Tabelle IV/Forts. 2 sind Eigenschaften der Dispersionen bzw. der Filme aus den Dispersionen gemäß den Vergleichsbeispielen III A bis III E und F ersichtlich.

Tabelle IV/Fortsetzungen 3 und 4 geben einen Überblick über das Fließverhalten der Dispersionen bei pH-Werten oberhalb 7. Angegeben sind die Viskositäten in cP bei bestimmten Feststoffgehalten der Dispersion.

Ergebnisse

Der Vergleichsversuch III A zeigt, daß die Verfahrensweise (Batch-Verfahren; $v_{Mon.} = 100$) gemäß US-Patentschrift 2 787 603 wegen der zu starken Wärmetönung und relativ hohen Koagulatbildung auch dann nicht zur Herstellung der Dispersionen im großtechnischen Maßstab herangezogen werden kann, wenn andere Parameter in dem beanspruchten Bereich der vorliegenden Erfindung liegen.

Außerdem verdickt die Dispersion im alkalischen Bereich so stark, daß keine Filme mehr herstellbar sind.

Die Dispersionen der Vergleichsversuche III B, III C und III D, in denen die Polymerisationskomponenten teilweise vorgelegt und teilweise nachdosiert werden, weisen zwar nach Einstellen auf pH-Werte größer als 7 (mit 10–25prozentigem $NH_3$) günstigeres Fließverhalten als Produkt III A auf, ferner einen geringeren Koagulatanteil, sie besitzen jedoch noch nicht ausreichende Elektrolytstabilitäten.

Vergleichsversuch III E, in dem bis auf den Methacrylsäureanteil alle Polymerisationsparameter in dem erfindungsgemäß beanspruchten Bereich liegen, demonstriert eine beachtliche Verbesserung der Elektrolytstabilität, jedoch eine geringe Verschlechterung des Fließverhaltens der Dispersion bei pH 8 bis 8,5, bedingt durch den Austausch des Emulgators Natriumlaurylsulfat durch erfindungsgemäßen Emulgator.

Vergleichsversuch F (= erfindungsgemäßes Beispiel), in dem noch der eingebaute Methacrylsäureanteil auf 4% erniedrigt wurde, zeigt, daß überraschenderweise das Fließverhalten der Dispersion im alkalischen Bereich wesentlich verbessert wird, ohne gleichzeitig die Elektrolytstabilität zu verschlechtern. Die Wasserfestigkeit O des aus dem auf pH = 8,5 eingestellten Latex III F erhaltenen Films ist ausgezeichnet.

Die Intrinsic Viskositäten $[\eta]$ der in den Dispersionen enthaltenen Copolymerisate sind nachstehend angegeben. Sie wurden in Dimethylformamid bei 25° C gemessen.

| Copolymerisat aus | III A | III B | III C | III D | III E | III F |
|---|---|---|---|---|---|---|
| $[\eta]$ dl/g | 7,0 | 7,4 | 5,4 | 5,3 | 5,6 | 5,4 |

Tabelle IV

| | | Vergleichsversuch | | | | | |
|---|---|---|---|---|---|---|---|
| | | III A | III B | III C | III D | III E | III F |
| I | Entionisiertes Wasser | 50,000 | 50,00 | 28,60 | 28,61 | 28,61 | 28,61 |
| | Natriumlaurylsulfat od. erfindungsgem. Emulgator* | 0,250 | 0,250 | 0,158 | 0,086 | 0,086* | 0,086* |
| | Natriumpyrosulfit | 0,045 | 0,045 | 0,045 | – | – | |
| | n-Butylacrylat | 29,250 | 3,94 | 2,50 | 2,50 | 2,50 | 2,524 |
| | Acrylnitril | 13,50 | 1,82 | 1,15 | 1,15 | 1,15 | 1,161 |
| | Methacrylsäure | 2,25 | 0,3 | 0,19 | 0,19 | 0,19 | 0,154 |
| II | Kaliumpersulfat | 0,135 | 0,135 | 0,135 | 0,031 | 0,031 | 0,031 |
| | Entionisiertes Wasser | 4,570 | 4,570 | 5,99 | 2,99 | 2,99 | 2,99 |
| III | Natriumpyrosulfit | – | – | – | 0,01 | 0,01 | 0,01 |
| | Entionisiertes Wasser | – | – | – | 2,99 | 2,99 | 2,99 |
| IV | n-Butylacrylat | – | 25,31 | 26,75 | 26,75 | 26,75 | 27,03 |
| | Acrylnitril | – | 11,68 | 12,34 | 12,34 | 12,34 | 12,47 |
| | Methacrylsäure | – | 1,95 | 2,05 | 2,05 | 2,05 | 1,64 |
| V | Entionisiertes Wasser | – | – | 20,0 | 10,0 | 10,0 | 10,0 |
| | Natriumpyrosulfit | – | – | – | 0,035 | 0,035 | 0,035 |
| | Natriumlaurylsulfat od. erfindungsgem. Emulgator* | – | – | 0,092 | 0,164 | 0,164* | 0,164* |

0 012 358

Fortsetzung

| | | Vergleichsversuch | | | | | |
| --- | --- | --- | --- | --- | --- | --- | --- |
| | | III A | III B | III C | III D | III E | III F |
| VI | Wasser | – | – | – | 10,0 | 10,0 | 10,0 |
| | Kaliumpersulfat | – | – | – | 0,104 | 0,104 | 0,104 |
| ACN-Einheiten | | 30 | 30 | 30 | 30 | 30 | 30,32 |
| AB-Einheiten | | 65 | 65 | 65 | 65 | 65 | 65,78 |
| MAS-Einheiten | | 5 | 5 | 5 | 5 | 5 | 4 |
| $p_{H_2O \, ges.}$, Gew.-% | | 54,57 | 54,57 | 54,57 | 54,57 | 54,57 | 54,57 |
| $p_{Mon. \, ges.}$, Gew.-% | | 45 | 45 | 45 | 45 | 45 | 45 |
| $p_{E. \, ges.}$, Gew.-% | | 0,25 | 0,25 | 0,25 | 0,25 | 0,25 | 0,25 |
| $p_{I. \, ges.}$, Gew.-% | | 0,18 | 0,18 | 0,18 | 0,18 | 0,18 | 0,18 |
| $k_{Mon.}$ | | 45,2 | 10 | 10 | 10 | 10 | 10 |
| $[E]_{v.}$ | | 4,58 | 4,58 | 4,57 | 2,5 | 2,5 | 2,5 |
| $[I]_{v.}$ | | 3,3 | 3,3 | 5,2 | 1,2 | 1,2 | 1,2 |
| $k_{I.}$ | | 0,3 | 0,3 | 0,3 | 0,3 | 0,3 | 0,3 |
| $v_{Mon.}$ | | 100 | 13,5 | 8,5 | 8,5 | 8,5 | 8,5 |

Tabelle IV / Fortsetzung 1

| | Vergleichsversuch | | | | | |
| --- | --- | --- | --- | --- | --- | --- |
| | III A | III B | III C | III D | III E | F |
| Feststoffgehalt Rohlatex %/pH | 44,3/4,25 | 44,5/4,3 | 44,2/4,5 | 44,3/4,5 | 44,1/4,3 | 44,2/4,3 |
| Koagulat (g), getrocknet 30 Min. 180−200°C | 32,5 | 3,5 | 6,5 | 6,0 | 7,0 | 8,6 |
| g Mikrokoagulat in 200 g Latex 200 μm | kein | 0,22 | 0,05 | kein | kein | kein |
| Restmonomeres ACN, Rohlatex n. GC. | 0,3 | 0,146 | 0,223 | 0,156 | 0,16 | 0,13 |
| Auslaufzeit nach DIN 53 211 4 mm ∅; pH des Rohlatex | 12,9 | 14,9 | 14,7 | 14,1 | 15,1 | 14,1 |
| Elektrolytstabilität: 25 g Latex, pH | 8 | 8 | 8 | 8 | 8 | 8 |
| + 10%ige NaCl, koaguliert nach ml | nicht meßbar*) | 9,8 | 6,6 | 7,0 | 20 | 18,6 |
| + 10%ige CaCl$_2$, koaguliert nach ml | nicht meßbar*) | 3,0 | 2,6 | 2,9 | 4 | 3,8 |
| + 2,5%ige CaCl$_2$, koaguliert nach ml | nicht meßbar*) | 7,2 | 6,0 | 6,3 | 10 | 10,4 |
| Wasserfestigkeit 0 | | | | | | |
| Film aus Latex mit pH des Rohlatex / Note | 2 D | 2 D | 2 D | 2 D | 2 D | 3 D |
| Film aus Latex mit pH = 8 / Note | kein Film herstellbar | 3 D | 3 D | 3 D | 3 D | 4 D |
| Teilchengröße Endlatex | 136 | 110 | 110 | 120 | 142 | 138 |
| Gefrierbeständigkeit pH/+ od. − (+ = gefrierbeständig) | 7,0/+ | 8,5/+ | 8,5/+ | 8,5/+ | 8,5/+ | 8,5/+ |

*) Zu viskos.

0012358

Tabelle IV / Fortsetzung 2

| Vergleichsvers. III A | | | | | III B | | III C | | III D | | III E | | F | |
|---|---|---|---|---|---|---|---|---|---|---|---|---|---|---|
| pH | pK | UpM | cP | Fest-stoff % | cP | Fest-stoff % | cP | Fest-stoff % | cP | Fest-stoff % | cP | Fest-stoff % | cP | Fest-stoff % |
| 7 | 1 | 6 | | | | | | | | | 503 | 44,04 | 144 | 43,89 |
| | | 12 | | | | | | | | | 405 | | 141 | |
| | | 30 | | | | | | | | | | | 126 | |
| | | 60 | | | | | | | | | | | | |
| | 2 | 6 | | | 3 020 | (44,3) | 2 785 | (44,4) | 1 325 | (44,4) | 535 | | 160 | |
| | | 12 | | | 1 788 | | 1 658 | | 918 | | 425 | | 153 | |
| | | 30 | | | 920 | | 867 | | 536 | | 282 | | 136 | |
| | | 60 | | | | | | | 355 | | 199 | | 112 | |
| | 3 | 6 | | | 3 600 | | 3 340 | | 1 600 | | 640 | | 200 | |
| | | 12 | | | 2 120 | | 2 030 | | 1 100 | | 500 | | 170 | |
| | | 30 | | | 1 088 | | 1 048 | | 656 | | 336 | | 152 | |
| | | 60 | | | 652 | | 640 | | 428 | | 230 | | 132 | |
| | 4 | 6 | 60 000 | (42,3) | 5 000 | | 4 400 | | 2 200 | | 700 | | 300 | |
| | | 12 | 31 750 | | 3 000 | | 2 750 | | 1 500 | | 650 | | 250 | |
| | | 30 | 13 960 | | 1 520 | | 1 400 | | 800 | | 460 | | 220 | |
| | | 60 | 7 590 | | 960 | | 860 | | 570 | | 330 | | 180 | |

Fortsetzung

| Vergleichsvers. III A | | | | | III B | | III C | | III D | | III E | | | F | |
|---|---|---|---|---|---|---|---|---|---|---|---|---|---|---|---|
| pH | pK | UpM | cP | Fest-stoff % | cP | Fest-stoff % | cP | Fest-stoff % | cP | Fest-stoff % | cP | Fest-stoff % | cP | | Fest-stoff % |
| 8 | 1 | 6 | | | | | | | | | | | 43,87 | | 43,72 |
| | | 12 | | | | | | | | | | | | | |
| | | 30 | | | | | | | | | | | | | |
| | | 60 | | | | | | | | | | | | | |
| | 2 | 6 | | | | | | | | | | | | 1 375 | |
| | | 12 | | | | | | | | | | | | 895 | |
| | | 30 | | | | | | | | | | | | 492 | |
| | | 60 | | | | | | | | | | | | 322 | |
| | 3 | 6 | | | 15 160 | (44,2) | 11 960 | (44,3) | 7 700 | (44,2) | 11 340 | | | 1 760 | |
| | | 12 | | | 8 740 | | 6 910 | | 4 450 | | 6 670 | | | 448 | |
| | | 30 | | | | | 3 384 | | 2 228 | | 3 376 | | | 600 | |
| | | 60 | | | | | – | | 1 344 | | | | | 386 | |

Fortsetzung

| | | | Vergleichsvers. III A | | III B | | III C | | III D | | III E | | F | |
|---|---|---|---|---|---|---|---|---|---|---|---|---|---|---|
| pH | pK | UpM | cP | Fest-stoff % | cP | Fest-stoff % | cP | Fest-stoff % | cP | Fest-stoff % | cP | Fest-stoff % | cP | Fest-stoff % |
| | 4 | 6 | | | 25 000 | | 17 700 | | 11 500 | | 16 400 | | 2 500 | |
| | | 12 | | | 13 650 | | 10 400 | | 6 650 | | 9 500 | | 1 500 | |
| | | 30 | | | 6 340 | | 4 900 | | 3 200 | | 4 660 | | 840 | |
| | | 60 | | | 3 680 | | 2 830 | | 1 850 | | 2 760 | | 530 | |
| 8,5 | 1 | 6 | | | | 44,1 | | 44,2 | | 44,1 | | 43,58 | | 43,66 |
| | | 12 | | | | | | | | | | | | |
| | | 30 | | | | | | | | | | | | |
| | | 60 | | | | | | | | | | | | |
| | 2 | 6 | | | | | | | | | | | 2 970 | |
| | | 12 | | | | | | | | | | | 1 775 | |
| | | 30 | | | | | | | | | | | 923 | |
| | | 60 | | | | | | | | | | | | |
| | 3 | 6 | | | | | | | | | | | 3 720 | |
| | | 12 | | | | | | | | | | | 2 230 | |
| | | 30 | | | | | | | | | | | 1 108 | |
| | | 60 | | | | | | | | | | | 692 | |

0 012 358

Fortsetzung

| Vergleichsvers. III A | | | | | III B | | III C | | III D | | III E | | F | |
|---|---|---|---|---|---|---|---|---|---|---|---|---|---|---|
| pH | pK | UpM | cP | Fest-stoff % | cP | Fest-stoff % | cP | Fest-stoff % | cP | Fest-stoff % | cP | Fest-stoff % | cP | Fest-stoff % |
| | 4 | 6 | | | 53 300 | | 53 300 | | 30 700 | | 36 200 | | 5 4 00 | |
| | | 12 | | | 30 600 | | 30 000 | | 17 200 | | 20 650 | | 3 1 50 | |
| | | 30 | | | 14 640 | | 14 320 | | 8 260 | | 10 160 | | 1 6 40 | |
| | | 60 | | | 8 770 | | 8 330 | | 4 830 | | 6 200 | 42,13 | 1 0 00 | |
| 9 | 1 | 6 | | | | | | | | | | | | 43,58 |
| | | 12 | | | | | | | | | | | | |
| | | 30 | | | | | | | | | | | | |
| | | 60 | | | | | | | | | | | | |
| | 2 | 6 | | | | | | | | | | | | |
| | | 12 | | | | | | | | | | | | |
| | | 30 | | | | | | | | | | | | |
| | | 60 | | | | | | | | | | | | |
| | 3 | 6 | | | | | | | | | | | 7 7 00 | |
| | | 12 | | | | | | | | | | | 4 5 00 | |
| | | 30 | | | | | | | | | | | 2 2 84 | |
| | | 60 | | | | | | | | | | | 1 3 98 | |

Fortsetzung

| Vergleichsvers. III A | | | | | III B | | III C | | III D | | III E | | F | |
|---|---|---|---|---|---|---|---|---|---|---|---|---|---|---|
| pH | pK | UpM | cP | Fest-stoff % | cP | Fest-stoff % | cP | Fest-stoff % | cP | Fest-stoff % | cP | Fest-stoff % | cP | Fest-stoff % |
| 4 | 6 | | | | | | | | >100 000 | | 37 500 | | 11 500 | |
| | 12 | | | | | | | | | | 21 800 | | 6 650 | |
| | 30 | | | | | | | | | | 11 000 | | 3 320 | |
| | 60 | | | | | | | | | | 6 770 | | 1 970 | |

**0 012 358**

Anwendungstechnischer Teil

Weißlack 1 auf Basis der erfindungsgemäß erhaltenen Dispersion E, Tabelle II

241 g Titandioxid (Rutiltyp), 52 g Wasser, 3 g eines handelsüblichen Pigmentbenetzers auf Basis eines Polyacrylatsalzes (40%ig in Wasser, z. B. Dispex G 40®, Handelsprodukt der Fa. Allied Colloids Mfg. Co. Ltd., Bradford/England), 3 g eines handelsüblichen Entschäumers für Dispersionslacke auf Basis eines oxethylierten Sojaöls und Erdalkalistearaten, ca. 8%ig in Mineralöl/Petroleum (80 : 10), 4 g Natriumbenzoat als Korrosionsinhibitor, 1 g Ammoniak (25%ig in Wasser) und 6 g eines handelsüblichen Verdickungsmittels auf Basis eines Polyetherurethans (5%ig in Wasser, z. B. Borchigel L 75®, Handelsprodukt der Firma Gebr. Borchers AG, Düsseldorf) werden mit einem Dissolver (Umfangsgeschwindigkeit der Dissolverscheibe = 20 m/s) zu einer zähflüssigen Pigmentpaste dispergiert. Nach beendetem Anreiben der Pigmentpaste wird unter langsamem Rühren eine Mischung aus 535 g der erfindungsgemäß erhaltenen, auf pH 8 – 8,5 mit 20%igem, wäßrigen NH₃ eingestellten Copolymerisat-Dispersion E, Tabelle II, 43 g Butyldiglykol und 65 g des handelsüblichen Verdickungsmittels auf Basis eines Polyetherurethans (20%ig in Wasser) zugesetzt.

Der Lack gibt nach dem Auftrocknen bei Raumtemperatur rißfreie, glänzende, harte Beschichtungen mit hoher Dehnbarkeit und ausgezeichneter Dauerhaftung auf den unterschiedlichsten Substraten, wie z. B. Stahl, Zink, Aluminium, Holz, mineralischen Untergründen u. a. m. Der Lack läßt sich mit dem Pinsel sehr gut verstreichen und zeigt einen für den Verlauf sehr günstigen Strukturexponenten Se (Bedeutung des Strukturexponenten für den Verlauf von Lacken siehe »Strukturviskose, streichfähige Dickschichtlacke auf Basis von Pergut S 10« von G. Freudenberg und R. Carstens, Farbe + Lack, 81. Jahrg., 1/1975, S. 16 – 21).

Weißlack 2 auf Basis der erfindungsgemäß erhaltenen Dispersion D, Tabelle II

241 g Titandioxid (Rutiltyp), 52 g Wasser, 3 g eines handelsüblichen Pigmentbenetzers auf Basis eines Polyacrylatsalzes (40%ig in Wasser, z. B. Dispex G 40®, Handelsprodukt der Fa. Allied Colloids Mfg. Co. Ltd., Bradford/England), 3 g eines handelsüblichen Entschäumers für Dispersionslacke auf Basis eines oxethylierten Sojaöls und von Erdalkalistearaten, ca. 8%ig in Mineralöl/Petroleum (80 : 10), 4 g Natriumbenzoat als Korrosionsinhibitor, 1 g Ammoniak (25%ig in Wasser) und 6 g eines handelsüblichen Verdickungsmittels auf Basis eines Polyetherurethans (5%ig) in Wasser, z. B. Borchigel L 75®, Handelsprodukt der Fa. Gebr. Borchers AG, Düsseldorf) werden mit einem Dissolver (Umfangsgeschwindigkeit der Dissolverscheibe = 20 m/s) zu einer zähflüssigen Pigmentpaste dispergiert. Nach beendetem Anreiben der Pigmentpaste wird unter langsamem Rühren eine Mischung aus 535 g der erfindungsgemäß erhaltenen Copolymerisat-Dispersion D, Tabelle II, pH = 8 – 8,5, 43 g Butyldiglykol und 65 g des handelsüblichen Verdickungsmittels auf Basis eines Polyetherurethans (20%ig in Wasser) zugesetzt.

Der Lack gibt nach dem Auftrocknen bei Raumtemperatur glänzende, harte und klebfreie Beschichtungen mit hoher Dehnbarkeit und ausgezeichneter Dauerhaftung auf den unterschiedlichsten Substraten, wie z. B. Stahl, Zink, Aluminium, Holz, mineralischen Untergründen u. a. m. Der Lack läßt sich mit dem Pinsel sehr gut verstreichen und zeigt einen für den Verlauf sehr günstigen Strukturexponenten Se (Bedeutung des Strukturexponenten für den Verlauf von Lacken siehe »Strukturviskose, streichfähige Dickschichtlacke auf Basis von Pergut S 10« von G. Freudenberg und R. Carstens, Farbe + Lack, 81. Jahrg., 1/1975, S. 16 – 21).

Weißlack 3 auf Basis der erfindungsgemäß erhaltenen Dispersion F, Tabelle II

241 g Titandioxid (Rutiltyp), 52 g Wasser, 3 g eines handelsüblichen Pigmentbenetzers auf Basis eines Polyacrylatsalzes (40%ig in Wasser, z. B. Dispex G 40®, Handelsprodukt der Fa. Allied Colloids Mfg. Co. Ltd., Bradford/England), 3 g eines handelsüblichen Entschäumers für Dispersionslacke auf Basis eines oxethylierten Sojaöls und Erdalkalistearaten, ca. 8%ig in Mineral/Petroleum (80 : 10), 4 g Natriumbenzoat als Korrosionsinhibitor, 1 g Ammoniak (25%ig in Wasser) und 6 g eines handelsüblichen Verdickungsmittels auf Basis eines Polyetherurethan (5%ig in Wasser, z. B. Borchigel L 75®, Handelsprodukt der Fa. Gebr. Borchers AG, Düsseldorf) werden mit einem Dissolver (Umfangsgeschwindigkeit der Dissolverscheibe = 20 m/s) zu einer zähflüssigen Pigmentpaste dispergiert. Nach beendetem Anreiben der Pigmentpaste wird unter langsamem Rühren eine Mischung aus 535 g der erfindungsgemäß erhaltenen Copolymerisat-Dispersion F, Tabelle II, pH = 8 – 8,5, 43 g Butyldiglykol und 65 g des handelsüblichen Verdickungsmittels auf Basis eines Polyetherurethans (20%ig in Wasser) zugesetzt.

Der Lack gibt nach dem Auftrocknen bei Raumtemperatur glänzende, weiche, aber nahezu klebfreie Beschichtungen mit besonders hoher Dehnbarkeit und ausgezeichneter Dauerhaftung auf den unterschiedlichsten Substraten, wie z. B. Stahl, Zink, Aluminium, Holz, mineralischen Untergründen u. a. m. Der Lack läßt sich mit dem Pinsel sehr gut verstreichen und zeigt einen für den Verlauf sehr günstigen Strukturexponenten Se (Bedeutung des Strukturexponenten für den Verlauf von Lacken siehe »Strukturviskose, streichfähige Dickschichtlacke auf Basis von Pergut S 10« von G. Freudenberg und R. Carstens, Farbe + Lack, 81. Jahrg., 1/1975, S. 16 – 21).

Korrosionsschutzlack 1 auf Basis der erfindungsgemäß erhaltenen Dispersion E, Tabelle II

121,5 g Titandioxid (Rutiltyp), 18,5 g Zinkchromat (Typ mit wenig wasserlöslichen Anteilen), 3,5 g Eisenoxidschwarzpigment, 3,0 g Eisenoxidbraunpigment, 26 g eines mikronisierten Glimmers, 26 g eines natürlichen Calciumcarbonats (Teilchengröße 5 – 20 µm), 39,5 g eines handelsüblichen Pigmentbenetzers (Ammoniumsalz einer niedrigviskosen Polyacrylsäure, 3%ig in Wasser), 4 g eines handelsüblichen Entschäumers für Dispersionslacke auf Basus eines oxethylierten Sojaöls und von Erdalkalistearaten, ca. 8%ig in Mineralöl/Petroleum (80 : 10), 4 g Natriumbenzoat (als Korrosionsinhibitor), 10 g Wasser, 17 g Butyldiglykolacetat und 17,5 g eines handelsüblichen Verdickungsmittels auf Basis eines Polyetherurethans (z. B. Borchigel L 75®, Handelsprodukt der Fa. Borchers AG, Düsseldorf, 5%ig in Wasser) werden mit einem Dissolver (Umfangsgeschwindigkeit der Dissolverscheibe = 20 m/s) zu einer zähflüssigen Pigmentpaste dispergiert. Nach beendetem Anreiben der Pigmentpaste werden unter langsamem Rühren 680 g der erfindungsgemäß erhaltenen Copolymerisat-Dispersion E, Tabelle II, pH = 8 – 8,5, zugesetzt.

Der Lack gibt nach dem Auftrocknen bei Raumtemperatur rißfreie, harte Beschichtungen mit hoher Dehnbarkeit und ausgezeichneter Dauerhaftung auf den unterschiedlichsten Untergründen, wie z. B. Stahl, Zink. Aluminium, Holz, mineralischen Untergründen u. a. m. Salzsprühnebelbeständigkeit: Stahlbleche wurden mit dem vorstehend beschriebenen Lack in einer Trockenfilmdicke von ca. 100 µm beschichtet und nach DIN 53 167 auf Beständigkeit gegenüber Salzsprühnebeln geprüft. Nach 20 Tagen wurde der Test ohne Befund abgebrochen.

Korrosionsschutzlack 2 auf Basis der erfindungsgemäß erhaltenen Dispersion D, Tabelle II

121,5 g Titandioxid (Rutiltyp), 18,5 g Zinkchromat (Typ mit wenig wasserlöslichen Anteilen), 3,5 g Eisenoxidschwarzpigment, 3 g Eisenoxidbraunpigment, 26 g eines mikronisierten Glimmers, 26 g eines natürlichen Calciumcarbonats (Teilchengröße 5 – 20 µm), 39,5 g eines handelsüblichen Pigmentbenetzers (Ammoniumsalz einer niedrigviskosen Polyacrylsäure, 3%ig in Wasser), 4 g eines handelsüblichen Entschäumers für Dispersionslacke auf Basis eines oxethylierten Sojaöls und von Erdalkalistearaten, ca. 8%ig in Mineralöl/Petroleum (80 : 10), 4 g Natriumbenzoat (als Korrosionsinhibitor), 10 g Wasser, 17 g Butyldiglykolacetat und 17,5 g eines handelsüblichen Verdickungsmittels auf Basis eines Polyetherurethans (z. B. Borchigel L 75®, Handelsprodukt der Fa. Borchers AG, Düsseldorf, 5%ig in Wasser) werden mit einem Dissolver (Umfangsgeschwindigkeit der Dissolverscheibe = 20 m/s) zu einer zähflüssigen Pigmentpaste dispergiert. Nach beendetem Anreiben der Pigmentpaste werden unter langsamem Rühren 680 g der erfindungsgemäß erhaltenen Copolymerisat-Dispersion D, Tabelle II, pH 8 – 8,5, zugesetzt.

Der Lack gibt nach dem Auftrocknen bei Raumtemperatur harte und nahezu klebfreie Beschichtungen mit hoher Dehnbarkeit und ausgezeichneter Dauerhaftung auf den unterschiedlichsten Substraten, wie z. B. Stahl, Zink, Aluminium, Holz, mineralischen Untergründen u. a. m. Salzsprühnebelbeständigkeit: Stahlbleche wurden mit dem vorstehend beschriebenen Lack in einer Trockenfilmdicke von ca. 100 µm beschichtet und nach DIN 53 167 auf Beständigkeit gegenüber Salzsprühnebeln geprüft. Nach 20 Tagen wurde der Test ohne Befund abgebrochen.

Weißlack 4 bzw. Korrosionslack 4

Die gemäß US-Patentschrift 2 787 603, Beispiel IV + I, d. h. gemäß Vergleichsbeispiel I A/Tabelle III/Fortsetzung 2, erhaltene 33%ige Dispersion verdickt nach Zugabe von 10%igem, wäßrigen $NH_3$, auf pH 8 zu einer Paste, die sich nicht zu einem Weiß- bzw. Korrosionslack gemäß Weißlack 1 oder Korrosionslack 1 verarbeiten läßt.

Wird versucht, den Rohlatex des Vergleichsversuchs I A (pH 3,8) zu einem Weiß- bzw. Korrosionslack gemäß Weißlack 1 oder Korrosionslack 1, ohne Zugabe von Ammoniak zu verarbeiten, so tritt während des Dispergierens Koagulation der Farben ein.

In den nachfolgenden Tabellen V und VI sind die Eigenschaften von Filmen aus den Weißlacken 1 bis 3 bzw. Korrosionsschutzlacke 1 bis 3 und aus entsprechenden Lacken mit handelsüblichen Dispersionen als Bindemittel gegenübergestellt.

Tabelle V

Eigenschaften der Weißlacke,
Trockenfilmdicke 100 µm

Zum Vergleich wurden neben den Lacken auf Basis der erfindungsgemäßen Copolymerisat-Dispersionen zwei Weißlacke auf Basis einer jeweils auf 45% Feststoffgehalt eingestellten handelsüblichen Acrylat/Styrol-Copolymerisat-Dispersion und einer Reinacrylat-Dispersion mitgeprüft. Die Herstellung solcher Vergleichsweißlacke erfolgt gemäß Vorschrift zur Herstellung des Weißlackes 1. Ein Vergleich der nachstehend angegebenen Werte zeigt die zumindest teilweise Überlegenheit von Weißlackierungen, hergestellt mit erfindungsgemäßen Bindemitteln gegenüber solchen, die mit handelsüblichen Bindemitteln hergestellt wurden.

| Weißlack | Verlauf visuell[1] | Struktur-exponent[2] | Glanz gem. DIN 67 530 85° Winkel | Klebfrei-heit[1] |
|---|---|---|---|---|
| 1 | 2 | −0,35 | 100 | 3 |
| 2 | 2 | −0,32 | 95 | 2 |
| 3 | 2 | −0,32 | 93 | 2−3 |
| Basis Acrylat/Styrol-Dispersion | 2−3 | −0,4 | 93 | 3−4 |
| Basis Reinacrylat-Dispersion | 3 | −0,5 | 94 | 2−3 |

[1]) Allgemeine Bewertungsskala:
   0 = ausgezeichnet
   1 = sehr gut
   2 = gut
   3 = befriedigend
   4 = ungenügend
   5 = sehr schlecht

[2]) Strukturexponent:
   0    = Newton'sches Fließverhalten (sehr gut)
   −0,9 = starke Strukturviskosität (unerwünscht)


Bestimmung der Klebfreiheit

Die Unterlage wird mit der Lackschicht nach oben auf eine tarierte Waage gelegt, die mit einem Gegengewicht von 1 kg belastet wird. Auf die Lackschicht wird ein kleiner, fettfreier Wattebausch von 2 bis 3 cm Durchmesser gelegt und auf diesen eine kleine Metallscheibe mit einem Durchmesser von 2 cm. Jetzt wird mit dem Finger auf die Scheibe gedrückt, bis die Waage im Gleichgewicht steht, und so wird die Waage während 10 Sekunden im Gleichgewicht gehalten. Nach Entfernen der Metallscheibe wird versucht, den Wattebausch durch sanftes Blasen zu entfernen. Die Lackschicht ist klebfrei, wenn der Bausch nicht mehr an der Lackschicht klebt und auch keine Haare hinterbleiben.

Tabelle VI

Eigenschaften der Korrosionsschutzlackierung,
100 µm Trockenfilmdicke auf 1-mm-Stahlblechen

Zum Vergleich wurden neben Lacken auf Basis der erfindungsgemäßen Copolymerisat-Dispersion zwei Korrosionsschutzlacke auf Basis einer jeweils auf 45% Feststoffgehalt eingestellten handelsüblichen Acrylat/Styrol-Copolymerisat-Dispersion und einer Reinacrylat-Dispersion mitgeprüft.
Die Herstellung der Vergleichslacke erfolgt gemäß Vorschrift für Korrosionsschutzlack 1.

| Korrosions-schutzlack | Pendel-härte nach König | Block-festig-keit[1] | Super-benzin-test | Salzsprühnebel-beständigkeit DIN 53 167 | Erichsen-Tiefe |
|---|---|---|---|---|---|
| 1 | 60 | 3 | 3 | 20 d | >10 mm |
| 2 | 70 | 2 | 2 | 20 d | >10 mm |
| 3 | 130 | 1 | 1 | 20 d | >10 mm |
| Basis Acrylat/Styrol-Dispersion | 40 | 3–4 | 3–4 | 20 d | >10 mm |
| Basis Reinacrylat-Dispersion | 60 | 2–3 | 2–3 | nach 15 d wegen Blasenbildung und Unterrostung abgebrochen | >10 mm |

[1] Allgemeine Bewertungsskala:
   0 = ausgezeichnet
   1 = sehr gut
   2 = gut
   3 = befriedigend
   4 = ungenügend
   5 = sehr schlecht

*) Die angegebenen Pendelhärten wurden nach König in Sek. nach 1 Woche Lufttrocknung bestimmt (siehe W. König, Farbe + Lack, 59 (1953), S. 435). Je geringer der Meßwert, desto weicher der Film.

Die Messung der Erichsen-Tiefe (Dehnbarkeit des Films) erfolgte gemäß DIN 53 156 in mm. Je höher der Meßwert, desto dehnbarer der Film.

### Bestimmung der Blockfestigkeit

Mit einer Rakel (Spalt 200 µm, Breite ca. 60 mm) wird der Dispersionsfilm auf eine PVC-Folie und auf ein Filterpapier aufgezogen. Nach einstündiger Trocknung bei 80°C und einstündiger Lagerung in einem Klimaraum bei 23°C und 50% relativer Luftfeuchte wird das Filterpapier mit der beschichteten Seite auf die Lackschicht der PVC-Folie gelegt und 1 Std. mit einem Stempel von ca. 2 cm Durchmesser belastet. Die Belastung beträgt 200 g/cm². Anschließend trennt man PVC-Folie und Filterpapier und beurteilt, ob die Druckflächen aneinanderkleben und welche Druckspuren hinterlassen werden. Hierbei wird die allgemeine Bewertungsskala nach DIN 53 230 zugrundegelegt.

### Bestimmung der Superbenzinfestigkeit

Ein mit Superbenzin getränkter Wattebausch wird 5 Minuten lang auf die Lackierung gelegt und nach dem Abnehmen sowie Abwischen des Restlösungsmittels sofort durch Ankratzen mit dem Fingernagel die Filmveränderung nach folgenden Bewertungsstufen beurteilt:

1 = unveränderte Filmhärte, d. h., nicht ankratzbar;
2 = nur die Lackoberfläche ist ankratzbar;

3 = die Lackschicht ist nur mit Mühe bis zur Blechoberfläche durchkratzbar;
4 = die Lackschicht ist gequollen und leicht bis zur Blechoberfläche durchkratzbar;
5 = angelöst.

Wie aus der Tabelle ersichtlich, besitzen die Filme von aus Korrosionsschutzlacken mit erfindungsgemäßen Bindemitteln teilweise eine höhere Pendelhärte nach König, eine höhere Blockfestigkeit und Superbenzinfestigkeit bzw. eine bessere Salzsprühnebelbeständigkeit als entsprechende Filme aus Lacken mit den angegebenen handelsüblichen Dispersionen.

In dem nachfolgenden anwendungstechnischen Teil werden mechanische Werte von Prüfkörpern verglichen, die aus Dispersionen gemäß vorliegender Erfindung und aus handelsüblichen Dispersionen erhalten wurden.

In den Tabellen VII bis X ist die Härte Shore D und Shore A (nach DIN 53 505) verschiedener Produkte (aus erfindungsgemäßen Dispersionen und handelsüblichen Dispersionen) in Abhängigkeit von der Temperatur (°C) und der Anpreßdauer (3 und 15 sek) angegeben, wobei n die Zahl der Einzelmessungen bedeutet. Die Messungen wurden an verschiedenen, 6 mm dicken, kreisrunden Prüfkörpern mit einem Durchmesser von 36,6 mm und einer glatten Oberfläche durchgeführt.

Die kreisrunden Prüfkörper werden aus 6 mm starken Preßplatten gestanzt. Zur Herstellung dieser Preßplatten wurden Dispersionen im Umluftschrank eingetrocknet, die klaren Felle auf einer Kunststoffwalze bei ca. 50−60°C verarbeitet und danach zu Walzfellen einer Stärke von ca. 10 mm ausgezogen.

Aus diesen Walzfellen stellte man Preßplatten bei einer Temperatur von 110°C, einem 10minütigen Vordruck von 15 bar und einem 10minütigen Nachdruck von 200 bar her, wobei die Stempelfläche der Presse einen Durchmesser von 300 mm besaß.

Verglichen werden folgende Polymerisattypen:

1) Polymerisat aus Dispersion C
2) Polymerisat aus Dispersion D
3) Polymerisat aus Dispersion E          gemäß Erfindung (siehe Tabelle II)
4) Polymerisat aus Dispersion F
5) Polymerisat aus Dispersion G

6) Polymerisat P-1:  aus handelsüblichen Dispersionen auf Basis von Copolymerisaten aus n-Butylacrylat, Styrol, $\alpha,\beta$-ungesättigter Monocarbonsäure.

7) Polymerisat P-2:  aus handelsüblichen Dispersionen auf Basis von Copolymerisaten aus n-Butylacrylat, Styrol, $\alpha,\beta$-ungesättigter Monocarbonsäure und polymerisierbarer Methylolverbindung

8) Polymerisat P-3:  aus handelsüblicher Dispersion auf Basis von Copolymerisaten aus Estern von Acrylsäuren.

9) Polymerisat P-4:  aus handelsüblicher Dispersion eines Vinylacetat-Copolymerisats.

10) Polymerisat P-5:  aus handelsüblicher Dispersion eines Vinylchlorid-Ethylen-Copolymerisats (ca. 20% Ethyleneinheiten).

Ferner ist aus den Tabellen VII bis X die Temperatur $T_{A\,max}$ in °C (vgl. DIN Vornorm 53 545, Bereich II) ersichtlich, bei der das logarithmische Dekrement der mechanischen Dämpfung im Torsionsschwingungsversuch (nach DIN 53 520) ein Maximum aufweist. $T_{A\,max}$ ist also ein Maß für den Haupterweichungsbereich des betreffenden Copolymerisats.

Die Dicke der Proben lag bei ca. 1,5 mm, die Probenbreite bei 8,0 mm, die Einspannlänge bei 40 mm, die Schwungscheibe besaß ein Massenträgheitsmoment von 37,4 kg/mm$^2$, die Zugspannung lag bei ca. 22 KPa (Kilo-Pascal).

Alle Proben wurden mit der gleichen Apparatur bei gleicher Aufheizgeschwindigkeit (ca. 1°C/min) gemessen.

Weiter ist aus den Tabellen VII bis X die Mindestfilmbildetemperatur MFT in °C, gemessen nach DIN 53 787, ersichtlich.

Der Vergleich der Werte in den Tabellen VII bis X zeigt, daß Copolymerisate aus erfindungsgemäßen Dispersionen gegenüber den angegebenen handelsüblichen Produkten bei vergleichbarer Temperatur des Haupterweichungsbereiches eine höhere Härte besitzen, insbesondere bei höheren Temperaturen. Gleichzeitig liegt die Mindestfilmbildetemperatur der Copolymerisate aus Dispersionen gemäß vorliegender Erfindung trotz hoher Härte niedriger als entsprechende Werte der Vergleichsprodukte. Darüberhinaus besitzen Copolymerisate aus Dispersionen gemäß Erfindung bei hoher Härte hohe Zugspannungen (gemessen nach DIN 53 504) und hohe Dehnungen, wie aus den Tabellen XI bis XII ersichtlich ist. Bei erhöhten Temperaturen, wenn die Polymerisate der handelsüblichen Produkte bereits fließen, haben die erfindungsgemäßen Produkte noch gut meßbare Zugspannungen.

Für die Messung der Zugfestigkeiten in [MPa] nach DIN 53 504 wurden Copolymerisate aus Dispersionen C, D, E, F und G gemäß Erfindung (Tabelle II) mit den bereits spezifizierten Copolmerisaten P-1 bis P-5 aus handelsüblichen Dispersionen verglichen.

Als Prüfkörper dienten S-2-Normstäbe, wie sie gemäß DIN 53 504 verwendet werden.

Es wurden von jedem Produkt 7 Normstäbe hergestellt und die Zugspannung in Abhängigkeit von der Elongation (Dehnung %) bei verschiedenen Temperaturen (20, 30, 40 und 60°C) gemessen. Zur Reißdehnung % und Festigkeit wird die Standardabweichung angegeben (vgl. Tabelle XI bis XII).

Die Standardabweichung S (Standard Deviation) bei n Messungen ($\Sigma \Delta x_i^2$ = Summe der Fehlerquadrate) ist definiert durch:

$$S = \pm \sqrt{\frac{\Sigma \Delta x_i^2}{(n-1)}}$$

Erläuterung vgl. z. B. K. H. Näser, Physikalisch-chemische Rechenaufgaben VEB Deutscher Verlag für Grundstoffindustrie, Leipzig 1970, S. 13 – 15.

In den Tabellen XI bis XII bedeuten:

$E_R$ = Zerreißdehnung in %,
S = Standardabweichung;
F = Zugfestigkeit (MPa; Zugspannung beim Zerreißen).

Tabelle VII

| Temp. [°C] | Polymerisat aus Dispersion C | | | | | | Polymerisat aus Dispersion D | | | | | | Polymerisat aus Dispersion E | | | | | |
| | Shore D | | | Shore A | | | Shore D | | | Shore A | | | Shore D | | | Shore A | | |
| | n | 3″ | 15″ | n | 3″ | 15″ | n | 3″ | 15″ | n | 3″ | 15″ | n | 3″ | 15″ | n | 3″ | 15″ |
| --- | --- | --- | --- | --- | --- | --- | --- | --- | --- | --- | --- | --- | --- | --- | --- | --- | --- | --- |
| −20 | 6 | 81 | 80 | — | — | — | 6 | 81 | 81 | — | — | — | 6 | 83 | 82 | — | — | — |
| −10 | 6 | 79 | 77 | — | — | — | 6 | 79 | 77 | — | — | — | 6 | 80 | 79 | — | — | — |
| ±0 | 6 | 77 | 75 | — | — | — | 6 | 77 | 75 | — | — | — | 6 | 78 | 78 | — | — | — |
| +10 | 6 | 75 | 72 | — | — | — | 6 | 75 | 72 | — | — | — | 6 | 75 | 73 | 6 | 99 | 99 |
| +20 | 6 | 67 | 63 | 6 | 99 | 99 | 6 | 67 | 63 | 6 | 99 | 99 | 6 | 71 | 68 | 6 | 97 | 96 |
| +30 | 6 | 52 | 43 | 6 | 94 | 91 | 6 | 52 | 43 | 6 | 93 | 87 | 6 | 56 | 47 | 6 | 85 | 73 |
| +40 | — | — | — | 6 | 70 | 58 | — | — | — | 6 | 67 | 53 | 6 | 31 | 21 | 6 | 51 | 41 |
| +50 | — | — | — | 6 | 43 | 39 | — | — | — | 6 | 42 | 39 | 6 | 13 | 9 | 6 | 36 | 34 |
| +60 | — | — | — | 6 | 37 | 34 | — | — | — | 6 | 37 | 33 | | | | 6 | 33 | 30 |
| +70 | — | — | — | 6 | 34 | 31 | — | — | — | 6 | 33 | 31 | | | | | | |
| +80 | — | — | — | 6 | 29 | 25 | — | — | — | 6 | 27 | 21 | | | | 6 | 25 | 20 |
| MFT [°C] | +15 | | | | | | +12 | | | | | | +15 | | | | | |
| $T_{\lambda\,max}$ [°C] | +43 | | | | | | +40 | | | | | | +37,5 | | | | | |

Tabelle VIII

| Temp. [°C] | Polymerisat aus Dispersion F | | | | | | Polymerisat aus Dispersion G | | | | | |
| | Shore D | | | Shore A | | | Shore D | | | Shore A | | |
| | n | 3″ | 15″ | n | 3″ | 15″ | n | 3″ | 15″ | n | 3″ | 15″ |
|---|---|---|---|---|---|---|---|---|---|---|---|---|
| −20 | 6 | 79 | 78 | — | — | — | 6 | 80 | 79 | — | — | — |
| −10 | 6 | 74 | 72 | — | — | — | 6 | 77 | 75 | — | — | — |
| 0 | 6 | 72 | 69 | — | — | — | 6 | 73 | 78 | — | — | — |
| +10 | 6 | 61 | 56 | — | — | — | 6 | 64 | 59 | — | — | — |
| +20 | 6 | 34 | 25 | 6 | 86 | 73 | 6 | 44 | 36 | 6 | 90 | 84 |
| +30 | — | — | — | 6 | 68 | 55 | — | — | — | 6 | 74 | 63 |
| +40 | — | — | — | 6 | 43 | 38 | — | — | — | 6 | 48 | 41 |
| +50 | — | — | — | 6 | 35 | 32 | — | — | — | 6 | 37 | 34 |
| +60 | — | — | — | 6 | 31 | 27 | — | — | — | 6 | 33 | 30 |
| +70 | — | — | — | 6 | 28 | 23 | — | — | — | 6 | 32 | 29 |
| +80 | — | — | — | 6 | 23 | 19 | — | — | — | 6 | 27 | 25 |
| MFT [°C] | +3 | | | | | | +8 | | | | | |
| $T_{\lambda\,max}$ [°C] | +31 | | | | | | +35 | | | | | |

Tabelle IX

| Temp. [°C] | P 1 Acrylat-Styrol-Copolymerisat | | | | | | P 2 Acrylat-Styrol-Copolymerisat | | | | | | P 3 Reinacrylat-Copolymerisat | | | | | |
| --- | --- | --- | --- | --- | --- | --- | --- | --- | --- | --- | --- | --- | --- | --- | --- | --- | --- | --- |
| | Shore D | | | Shore A | | | Shore D | | | Shore A | | | Shore D | | | Shore A | | |
| | n | 3″ | 15″ | n | 3″ | 15″ | n | 3″ | 15″ | n | 3″ | 15″ | n | 3″ | 15″ | n | 3″ | 15″ |
| −20 | 9 | 76 | 75 | — | — | — | 18 | 79 | 78 | — | — | — | 3 | 83 | 82 | — | — | — |
| −10 | 9 | 74 | 73 | — | — | — | 18 | 76 | 75 | — | — | — | 3 | 81 | 80 | — | — | — |
| ± 0 | 9 | 72 | 70 | — | — | — | 18 | 73 | 71 | — | — | — | 3 | 76 | 74 | — | — | — |
| +10 | 9 | 69 | 66 | — | — | — | 18 | 67 | 62 | — | — | — | 3 | 74 | 70 | — | — | — |
| +20 | 9 | 50 | 40 | 9 | 90 | 86 | 18 | 32 | 20 | 18 | 80 | 62 | 3 | 55 | 45 | 3 | 96 | 92 |
| +30 | 9 | 25 | 14 | 9 | 72 | 54 | 18 | 13 | 7 | 18 | 57 | 42 | — | — | — | 3 | 78 | 62 |
| +40 | — | — | — | 9 | 32 | 26 | 18 | 31 | — | 18 | 31 | 25 | — | — | — | 3 | 51 | 40 |
| +50 | — | — | — | 9 | 24 | 21 | — | — | — | 18 | 21 | 17 | — | — | — | 3 | 35 | 29 |
| +60 | — | — | — | 9 | 20 | 16 | — | — | — | 18 | 17 | 13 | — | — | — | 3 | 25 | 19 |
| +70 | — | — | — | 9 | 13 | 10 | — | — | — | 18 | 13 | 9 | — | — | — | 3 | 22 | 17 |
| +80 | — | — | — | 9 | 10 | 7 | — | — | — | 18 | 10 | 7 | — | — | — | — | — | — |

| $T_{\lambda max}$ [°C] | +38 | | | | | | +35,5 | | | | | | +38 | | | | | |
| MFT [°C] | +22 | | | | | | +16 | | | | | | +18 | | | | | |

Tabelle X

| Temp. [°C] | P 4 Vinylacetat-Acrylat Copolymerisat | | | | | | P 5 Vinylchlorid-Ethylen-Copolymerisat | | | | | |
|---|---|---|---|---|---|---|---|---|---|---|---|---|
| | Shore D | | | Shore A | | | Shore D | | | Shore A | | |
| | n | 3″ | 15″ | n | 3″ | 15″ | n | 3″ | 15″ | n | 3″ | 15″ |
| −20 | 3 | 83 | 83 | — | — | — | 3 | 80 | 79 | — | — | — |
| −10 | 3 | 83 | 82 | — | — | — | 3 | 77 | 75 | — | — | — |
| ± 0 | 3 | 79 | 77 | — | — | — | 3 | 73 | 70 | — | — | — |
| +10 | 3 | 71 | 65 | — | — | — | 3 | 65 | 60 | 3 | 97 | 97 |
| +20 | 3 | 46 | 34 | 3 | 94 | 88 | — | — | — | 3 | 86 | 75 |
| +30 | — | — | — | 3 | 70 | 53 | — | — | — | 3 | 57 | 49 |
| +40 | — | — | — | 3 | 37 | 27 | — | — | — | 3 | 41 | 33 |
| +50 | — | — | — | 3 | 24 | 16 | — | — | — | 3 | 27 | 20 |
| +60 | — | — | — | 3 | 13 | 6 | — | — | — | 3 | 17 | 12 |
| +70 | — | — | — | 3 | 7 | 2 | — | — | — | 3 | 8 | 4 |
| +80 | | | | | | | | | | | | |
| $T_{\lambda max}$ [°C] | +28 | | | | | | +27 | | | | | |
| MFT [°C] | +9 | | | | | | +18 | | | | | |

Tabelle XI

Zugspannungen in MPa nach DIN 53 504, je 7 Messungen pro angegebenen Wert bei °C

| Dehnung % | 20°C Copolymerisate aus der erfindungsgemäßen Dispersion | | | | | 30°C Copolymerisate aus der erfindungsgemäßen Dispersion | | | | | 40°C Copolymerisate aus der erfindungsgemäßen Dispersion | | | | | 60°C Copolymerisate aus der erfindungsgemäßen Dispersion | | | | |
|---|---|---|---|---|---|---|---|---|---|---|---|---|---|---|---|---|---|---|---|---|
| | C | D | E | F | G | C | D | E | F | G | C | D | E | F | G | C | D | E | F | G |
| 50 | 17,4 | 15,7 | 11,2 | 6,6 | 9,3 | 9,8 | 8,0 | 4,4 | 1,4 | 3,3 | 2,9 | 2,0 | 1,2 | 0,7 | 0,9 | 0,5 | 0,4 | 0,4 | 0,3 | 0,4 |
| 100 | 17,7 | 15,8 | 11,1 | 7,5 | 10,3 | 10,4 | 9,1 | 5,2 | 2,3 | 4,4 | 3,9 | 2,8 | 1,4 | 0,8 | 1,3 | 0,7 | 0,6 | 0,5 | 0,4 | 0,5 |
| 150 | 19,4 | 16,4 | 12,2 | 9,4 | 12,1 | 11,8 | 10,7 | 6,0 | 3,0 | 5,5 | 5,1 | 3,7 | 1,8 | 1,1 | 1,8 | 0,8 | 0,8 | 0,6 | 0,5 | 0,7 |
| 200 | 21,2 | 17,8 | 14,5 | 11,8 | 15,1 | 14,8 | 13,2 | 7,2 | 4,2 | 7,2 | 6,8 | 4,9 | 2,3 | 1,3 | 2,5 | 1,1 | 1,0 | 0,6 | 0,7 | 0,8 |
| 250 | 23,9 | 20,4 | 17,3 | 15,8 | 18,4 | 17,6 | 16,5 | 8,8 | 5,5 | 8,8 | 9,0 | 6,3 | 2,6 | 1,7 | 3,2 | 1,3 | 1,1 | 0,7 | 0,7 | 1,0 |
| 300 | – | – | 19,7 | 19,8 | 21,7 | 22,8 | 22,2 | 10,9 | 7,8 | 12,0 | 12,2 | 8,9 | 3,1 | 2,2 | 4,1 | 1,5 | 1,3 | 0,8 | 0,8 | 1,3 |
| 350 | | | | 23,1 | 24,0 | | | 13,2 | 10,7 | 13,7 | 16,9 | 12,5 | 3,8 | 2,8 | 5,1 | 1,8 | 1,5 | 0,9 | 0,9 | 1,5 |
| 400 | | | | | | | | 14,2 | 14,3 | | 20,4 | 15,8 | 4,6 | 3,5 | 6,3 | 1,9 | 1,7 | 0,9 | 1,0 | 1,7 |
| 450 | | | | | | | | | | | | | 5,7 | 4,7 | 8,2 | 2,2 | 2,0 | 0,9 | 1,1 | 2,0 |
| 500 | | | | | | | | | | | | | | 5,9 | | 2,7 | 2,3 | 1,0 | 1,2 | 2,3 |
| 550 | | | | | | | | | | | | | | 7,8 | | 2,9 | 2,6 | 0,9 | 1,3 | 2,2 |
| 600 | | | | | | | | | | | | | | | | 3,3 | 2,5 | 1,2 | 1,4 | 2,9 |
| 650 | | | | | | | | | | | | | | | | | 2,8 | 1,2 | 1,6 | |
| $E_R$ %*) | 235 | 245 | 290 | 335 | 310 | 310 | 275 | 390 | 390 | 360 | 380 | 390 | 485 | 513 | 410 | 565 | 565 | 675 | 680 | 480 |
| S | ±18 | 34 | 10 | 36 | 39 | 10 | 42 | 30 | 22 | 39 | 18 | 16 | 26 | 50 | 55 | 100 | 50 | 47 | 80 | 87 |
| F (MPa)**) | 23,4 | 21,5 | 19,7 | 22,7 | 22,2 | 23,7 | 17,3 | 14,8 | 13,8 | 14,9 | 18,7 | 16,4 | 7,0 | 7,0 | 7,7 | 3,6 | 2,7 | 1,2 | 1,7 | 2,3 |
| S | ±1,3 | 1,4 | 0,5 | 3,5 | 2,8 | 1,7 | 4,6 | 1,5 | 2,0 | 2,2 | 1,7 | 3,5 | 0,1 | 1,7 | 1,6 | 0,5 | 0,4 | 0,2 | 0,3 | 0,5 |

*) Reißdehnung $E_R$ (%)
**) Festigkeit F (MPa)

Tabelle XII

| Dehnung % | Zugspannungen in MPa nach DIN 53 504, je 7 Messungen, Angabe des Mittelwertes bei °C | | | | | | | | | | | | | | | | | | | |
| --- | --- | --- | --- | --- | --- | --- | --- | --- | --- | --- | --- | --- | --- | --- | --- | --- | --- | --- | --- | --- |
| | 20°C; Copolymerisate aus der handelsüblichen Dispersion | | | | | 30°C; Copolymerisate aus der handelsüblichen Dispersion | | | | | 40°C; Copolymerisate aus der handelsüblichen Dispersion | | | | | 60°; Copolymerisate aus der handelsüblichen Dispersion | | | | |
| | P 1 | P 2 | P 3 | P 4 | P 5 | P 1 | P 2 | P 3 | P 4 | P 5 | P 1 | P 2 | P 3 | P 4 | P 5 | P 1 | P 2 | P 3 | P 4 | P 5 |
| 50 | | | | | | | | 4,1 | 2,1 | 1,7 | | | 1,3 | 0,6 | 0,8 | | | | 0,1 | |
| 100 | 5,0 | 3,2 | 13,4 | 7,9 | 8,7 | | | 4,4 | 2,8 | 2,3 | 0,8 | 0,6 | 1,7 | 0,8 | 1,1 | | | | 0,2 | |
| 150 | | | 14,2 | 8,3 | 10,8 | | | 5,3 | 3,2 | 3,1 | | | 2,3 | 0,9 | 1,4 | | | | | |
| 200 | | | 15,7 | 8,9 | 12,7 | | | 6,5 | 3,7 | 3,7 | | | 3,1 | 1,1 | 1,6 | | | | 0,2 | |
| 250 | | | 16,8 | 9,9 | 14,3 | | | 7,7 | 4,3 | 4,4 | | | 3,8 | 1,3 | 1,8 | | | | | |
| 300 | 6,2 | 5,0 | | 11,2 | 14,6 | | | | 5,2 | 5,1 | 2,0 | 1,3 | 3,9 | 1,4 | 2,0 | | | | 0,2 | |
| 350 | | | | 12,6 | | | | | 5,7 | 5,9 | | | 4,8 | 1,5 | 2,2 | | | | | |
| 400 | | | | | | | | | 6,2 | 6,7 | | | | 1,8 | 2,4 | | | | 0,1 | |
| 450 | | | | | | | | | 6,6 | 7,6 | | | | 1,8 | 2,5 | | | | | |
| 500 | | | | | | | | | 6,1 | 7,4 | | | | 2,0 | 2,7 | | | | 0,1 | |
| 550 | | | | | | | | | 6,7 | | | | | 2,1 | 2,8 | | | | | |
| 600 | | | | | | | | | | | | | | 2,2 | 2,9 | | | | | |
| 650 | | | | | | | | | | | | | | 2,3 | 2,9 | | | | | |
| $E_R$ % | 310 | 420 | 240 | 370 | 280 | | | 315 | 455 | 470 | 430 | 45 | 330 | 570 | 730 | | | | 1000 | |
| S | ±15 | 6 | 17 | 13 | 15 | | | 40 | 66 | 53 | 15 | 40 | 52 | 150 | 33 | | | | | |
| F (MPa) | 7,97 | 7,1 | 16,7 | 13 | 14,9 | | | 9,8 | 6,7 | 7,8 | 2,8 | 3,2 | 5,0 | 2,3 | 3,2 | | | | 0,1 | |
| S | ±0,2 | 0,1 | 0,7 | 0,7 | 0,8 | | | 0,5 | 0,8 | 0,7 | 0,1 | 0,1 | 0,3 | 0,5 | 0,3 | | | | — | |

## Patentansprüche

1. Feinteilige, wäßrige Dispersionen mit einem mittleren Teilchendurchmesser von 0,1 bis 0,15 μm, sowie mit einem Feststoffgehalt von 40 bis 50 Gew.-% von Copolymerisaten aus copolymerisierten Einheiten von:

(A) 20 bis 48 Gew.-%    Acrylnitril, wobei jeweils 40 bis 60 Gew.-% der angegebenen Menge des Acrylnitrils durch Styrol ersetzt sein können,

(B) 47,5 bis 70,5 Gew.-%    n-Butylacrylat,

(C) 3,5 bis 4,5 Gew.-%    Methacrylsäure oder einer Mischung aus Methacrylsäure und Acrylsäure mit einem Acrylsäureanteil von höchstens 50 Gew.-%, sowie

(D) 0 bis 5 Gew.-%    N-Methoxymethyl-methacrylamid

— Die Summe der Prozentgehalte beträgt 100 —

durch Emulsionspolymerisation unter Luftausschluß und Rühren bis zu praktisch vollständigem Monomerenumsatz bei Temperaturen von 30 bis 70°C in Gegenwart eines Emulgators und eines wasserlöslichen Initiatorsystems unter Zugabe eines Teils der Monomeren A bis D, eines Teils des in Wasser gelösten Emulgators sowie eines Teils des in Wasser gelösten Initiatorsystems zu einer Vorlage aus Wasser, Monomerengemisch und Emulgator nach Auslösung der Polymerisation, hergestellt durch die Kombination der Maßnahmen und dadurch gekennzeichnet, daß

I. a) 59,7—48,4 Gew.-% Wasser ($p_{H_2O\ ges}$), wobei

$$p_{H_2O\ ges.} = p_{H_2O\ E.v} + p_{H_2O\ Ox.v} + p_{H_2O\ Red.v} + p_{H_2O\ E.n.} + p_{H_2O\ Ox.n} + p_{H_2O\ Red.n.}$$

bedeutet,

b) 40,0—50,0 Gew.-% Monomerengemisch ($p_{Mon.\ ges.}$) aus den Komponenten A bis D, wobei

$$p_{Mon.\ ges.} = p_{Mon.v.} + p_{Mon.n.}$$

ist,

c) 0,25—2,0 Gew.-% Emulgator, $p_{E\ ges.}$, wobei

$$p_{E.\ ges.} = p_{E.v.} + p_{E.n.}$$

ist, und

d) 0,025—0,4 Gew.-% eines Initiatorsystems, $p_{I.\ ges.}$, wobei

$$p_{I.\ ges.}\ \text{für}\ p_{I.v.} + p_{I.n.} = p_{Ox.v.} + p_{Red.v.} + p_{Ox.n.} + p_{Red.n.} = p_{Ox.\ ges.} + p_{Red.\ ges}$$

steht,

— wobei ferner das Initiatorsystem $p_{I.\ ges.}$ aus Kalium- oder Ammoniumperoxidisulfat oder deren Mischungen oder aus den erwähnten Persulfaten und Natrium- oder Kaliumpyrosulfit oder deren Mischungen besteht, und
— wobei der Emulgator das Ammoniumsalz des sauren Schwefelsäureesters des Anlagerungsproduktes von durchschnittlich 10 Mol Ethylenoxid an 1 Mol Laurylalkohol darstellt, wobei ferner die Zusammensetzung des Monomerengemisches aus den Monomeren A bis D der integralen Zusammensetzung des gewünschten Copolymerisats entspricht, und die Summe der Gewichtsprozente der Komponenten Ia bis Id 100 beträgt —

eingesetzt worden sind;

II. a) das Verhältnis $k_{Mon.}$ der vorgelegten Monomerenmenge, $p_{Mon.v.}$, zur Summe von vorgelegter Monomerenmenge und insgesamt vorgelegter Wassermenge,

$$p_{H_2O\ v.ges.} = p_{H_2O\ E.v.} + p_{H_2O\ Ox.v.} + p_{H_2O\ Red.v.}$$

auf:

$$k_{Mon.} = \frac{p_{Mon.v.}}{(p_{Mon.v.} + p_{H_2O\ v.ges.})} \times 100 = 5{,}0-20,$$

b) die Konzentration $[E]_v$ der vorgelegten Emulgatormenge $p_{E.v.}$ in der insgesamt vorgelegten Wassermenge, $p_{H_2O\ v.ges.}$ auf:

$$[E]_v = \frac{p_{E.v.}}{p_{H_2O\ v.ges.}} \times 1000 = 2-40,$$

44

c) die Konzentration $[I]_{v.}$ der vorgelegten Initiatormenge, $p_{I.v.} = p_{Ox.v.} + p_{Red.v.}$, in der insgesamt vorgelegten Wassermenge, $p_{H_2O\ v.ges.}$, auf:

$$[I]_{v.} = \frac{p_{I.v.}}{p_{H_2O\ v.ges.}} \times 1000 = 0{,}5-4,$$

d) das Gewichtsverhältnis $k_{I.}$ von Pyrosulfit zu Persulfat auf Werte von:

$$k_{I.} = \frac{p_{Red.ges.}}{p_{Ox.ges.}} = 0-4,$$

wobei der Wert 0 bei Polymerisationstemperaturen oberhalb $+55°C$ bis $70°C$ und die Werte $>0$ bis 4 bei Polymerisationstemperaturen von 30 bis $70°C$ gelten,

e) das Gewichtsverhältnis $v_{Mon.}$ von vorgelegter zu insgesamt eingesetzter Monomerenmenge auf Werte von

$$v_{Mon.} = \frac{p_{Mon.v.}}{(p_{Mon.v.} + p_{Mon.n.})} \times 100 = 2-15,$$

festgelegt worden sind, und

III. die Vorlage aus den Komponenten $p_{H_2O\ E.v.} + p_{Mon.v.} + p_{E.v.}$ auf die gewünschte, im Bereich von $30-70°C$ liegende Polymerisationstemperatur erwärmt, die Komponenten $p_{Ox.v.}$, gelöst in $p_{H_2O\ Ox.v.}$ und $p_{Red.v.}$, gelöst in $p_{H_2O\ Red.v.}$ gleichzeitig, aber getrennt, zugefügt, wobei eine konstante Polymerisationstemperatur, gegebenenfalls unter Kühlen, eingehalten worden ist, und die restlichen Komponenten, $p_{Mon.n.}$, $p_{E.n.}$, gelöst in $p_{H_2O\ E.n.}$ und $p_{I.n.} = p_{Ox.n.} + p_{Red.n.}$, gelöst in $p_{H_2O\ Ox.n.}$ und $p_{H_2O\ Red.n.}$, im Laufe von 2 bis 8 Stunden kontinuierlich in das polymerisierende Gemisch nachdosiert worden sind und ca. 2 Std. bei der Polymerisationstemperatur nachgerührt worden ist.

2. Verfahren zur Herstellung von feinteiligen, wäßrigen Dispersionen mit einem mittleren Teilchendurchmesser von 0,1 bis 0,15 µm, sowie mit einem Feststoffgehalt von 40 bis 50 Gew.-% von Copolymerisaten aus copolymerisierten Einheiten von:

(A) 20 bis 48 Gew.-%    Acrylnitril, wobei jeweils 40 bis 60 Gew.-% der angegebenen Menge des Acrylnitrils durch Styrol ersetzt sein können,

(B) 47,5 bis 70,5 Gew.-%    n-Butylacrylat,

(C) 3,5 bis 4,5 Gew.-%    Methacrylsäure oder einer Mischung aus Methacrylsäure und Acrylsäure mit einem Acrylsäureanteil von höchstens 50 Gew.-%, sowie

(D) 0 bis 5,0 Gew.-%    N-Methoxymethyl-methacrylamid

— Die Summe der Prozentgehalte beträgt 100 —

durch Emulsionspolymerisation unter Luftausschluß und Rühren bis zu praktisch vollständigem Monomerenumsatz bei Temperaturen von 30 bis 70°C in Gegenwart eines Emulgators und eines wasserlöslichen Initiatorsystems unter Zugabe eines Teils der Monomeren A bis D, eines Teils des in Wasser gelösten Emulgators, sowie eines Teils des in Wasser gelösten Initiatorsystems zu einer Vorlage aus Wasser, Monomerengemisch und Emulgator nach Auslösung der Polymerisation, gekennzeichnet durch die Kombination der Maßnahmen, daß man

I. a) 59,7−48,4 Gew.-% Wasser ($p_{H_2O\ ges.}$), wobei

$p_{H_2O\ ges.} = p_{H_2O\ E.v.} + p_{H_2O\ Ox.v.} + p_{H_2O\ Red.v.} + p_{H_2O\ E.n.} + p_{H_2O\ Ox.n.} + p_{H_2O\ Red.n.}$
bedeutet,

b) 40,0−50,0 Gew.-% Monomerengemisch $p_{Mon.ges.}$ aus den Komponenten A bis D, wobei

$p_{Mon.ges.} = p_{Mon.v.} + p_{Mon.n.}$
ist,

c) 0,25−2,0 Gew.-% Emulgator, $p_{E.ges.}$, wobei

$p_{E.ges.} = p_{E.v.} + p_{E.n.}$
ist, und

d) 0,025−0,4 Gew.-% eines Initiatorsystems, $p_{I.\,ges.}$, wobei

$p_{I.\,ges.}$ für $p_{I.\,v.} + p_{I.\,n.} = p_{Ox.\,v.} + p_{Red.\,v.} + p_{Ox.\,n.} + p_{Red.\,n.} = p_{Ox.\,ges.} + p_{Red.\,ges.}$ steht

— wobei ferner das Initiatorsystem $p_{I.\,ges.}$ aus Kalium- oder Ammoniumperoxidisulfat oder deren Mischungen oder aus den erwähnten Persulfaten und Natrium- oder Kaliumpyrosulfit oder deren Mischungen besteht, und
— wobei der Emulgator das Ammoniumsalz des sauren Schwefelsäuresters des Anlagerungsproduktes von durchschnittlich 10 Mol Ethylenoxid an 1 Mol Laurylalkohol darstellt, wobei ferner die Zusammensetzung des Monomerengemisches aus den Monomeren A bis D der integralen Zusammensetzung des gewünschten Copolymerisats entspricht, und die Summe der Gewichtsprozente der Komponenten Ia bis Id 100 beträgt —

einsetzt;

II. a) das Verhältnis $k_{Mon.}$ der vorgelegten Monomerenmenge, $p_{Mon.\,v.}$, zur Summe von vorgelegter Monomerenmenge und insgesamt vorgelegter Wassermenge,

$p_{H_2O\,v.\,ges.} = p_{H_2O\,E.v.} + p_{H_2O\,Ox.v.} + p_{H_2O\,Red.v.}$

auf:

$$k_{Mon.} = \frac{p_{Mon.\,v.}}{(p_{Mon.\,v} + p_{H_2O\,v.\,ges.})} \times 100 = 5-20,$$

b) die Konzentration $[E]_v.$ der vorgelegten Emulgatormenge $p_{E.v.}$ in der insgesamt vorgelegten Wassermenge, $p_{H_2O\,v.\,ges.}$ auf:

$$[E]_v. = \frac{p_{E.v.}}{p_{H_2O\,v.\,ges.}} \times 1000 = 2-40,$$

c) die Konzentration $[I]_v.$ der vorgelegten Initiatormenge, $p_{I.v.} + p_{Red.v.}$, in der insgesamt vorgelegten Wassermenge, $p_{H_2O\,v.\,ges.}$, auf:

$$[I]_v. = \frac{p_{I.v.}}{p_{H_2O\,v.\,ges.}} \times 1000 = 0,5-4,$$

d) das Gewichtsverhältnis $k_I$ von Pyrosulfit zu Persulfat auf Werte von:

$$k_I = \frac{p_{Red.\,ges.}}{p_{Ox.\,ges.}} = 0-4,$$

wobei der Wert 0 bei Polymerisationstemperaturen oberhalb +55°C bis 70°C und die Werte >0 bis 4 bei Polymerisationstemperaturen von 30 bis 70°C gelten,

e) das Gewichtsverhältnis $v_{Mon.}$ von vorgelegter zu insgesamt eingesetzter Monomerenmenge auf Werte von

$$v_{Mon.} = \frac{p_{Mon.\,v.}}{(p_{Mon.\,v.} + p_{Mon.\,n.})} \times 100 = 2-15,$$

festlegt;

III. die Vorlage aus den Komponenten $p_{H_2O\,E.v.} + p_{Mon.\,v.} + p_{E.v.}$ auf die gewünschte, im Bereich von 30−70°C liegende Polymerisationstemperatur erwärmt, die Komponenten $p_{Ox.v.}$ gelöst in $p_{H_2O\,Ox.v.}$ und $p_{Red.v.}$ gelöst in $p_{H_2O\,Red.v.}$ gleichzeitig, aber getrennt, zugefügt, wobei eine konstante Polymerisationstemperatur, gegebenenfalls unter Kühlen, eingehalten wird, und die restlichen Komponenten, $p_{Mon.\,n.}$, $p_{E.\,n.}$ gelöst in $p_{H_2O\,E.n.}$ und $p_{I.\,n.} = p_{Ox.\,n.} + p_{Red.\,n.}$, gelöst in $p_{H_2O\,Ox.n.}$ und $p_{H_2O\,Red.n.}$, im Laufe von 2 bis 8 Stunden kontinuierlich in das polymerisierende Gemisch nachdosiert und ca. 2 Std. bei der Polymerisationstemperatur nachrührt.

3. Verwendung der wäßrigen Copolymerisatdispersionen gemäß Anspruch 1 als Bindemittel in unpigmentierten und pigmentierten, wäßrigen Anstrichmitteln.

46

# 0 012 358

## Claims

1. Finely divided aqueous dispersions having an average particle diameter ranging from 0.1 to 0.15 μm and a solids content of from 40 to 50% by weight of copolymers of copolymerized units of:

(A) 20 to 48%     by weight of acrylonitrile in which 40 to 60% by weight of the given quantity of acrylonitrile may be replaced by styrene,

(B) 47.5 to 70.5%    by weight of n-butyl acrylate,

(C) 3.5 to 4.5%     by weight of methacrylic acid or of a mixture of methacrylic and acrylic acid comprising not more than 50% by weight of acrylic acid, and

(D) 0 to 5%      by weight of the N-methoxymethyl-methacrylamide,

in which the sum of the percentages is 100,

by emulsion polymerization with exclusion of air and with stirring until virtually complete conversion of the monomers at temperatures of 30 to 70°C in the presence of an emulsifier and of a water-soluble initiator system with the addition of part of the monomers (A) to (D), part of the emulsifier dissolved in water and part of the initiator system dissolved in water to a reaction mixture of water, monomer mixture and emulsifier after polymerization has been released, prepared by the combination of the following measures and characterised in that the following components have been used:

I.   a)   59.7 to 48.4 % by weight of water $(p_{H_2O \, total})$ wherein

$$p_{H_2O \, total} = p_{H_2O \, E.v.} + p_{H_2O \, Ox.v.} + p_{H_2O \, Red.v.} + p_{H_2O \, E.n.} + p_{H_2O \, Ox.n.} + p_{H_2O \, Red.n.},$$

   b)   40.0 to 50.0 % by weight of monomer mixture $p_{Mon. \, total}$ of components (A) to (D), wherein

$$p_{Mon. \, total} = p_{Mon.v.} + p_{Mon.n.},$$

   c)   0.25 to 2.0 % by weight of emulsifier $p_{E.total}$, wherein

$$p_{E. total} = p_{E.v.} + p_{E.n.}, \text{ and}$$

   d)   0.025 to 0.4 % by weight of an initiator system $p_{I.total}$, wherein

$$p_{I. total} \text{ stands for } p_{I.v.} + p_{I.n.} = p_{Ox.v.} + p_{Red.v.} + p_{Ox.n.} + p_{Red.n.} = p_{Ox. total} + p_{Red. total},$$

wherein furthermore the initiator system $p_{I.total}$ consists of potassium or ammonium peroxidisulphate or mixtures thereof or of the aforementioned persulphates and sodium or potassium pyrosulphite or mixtures thereof, and wherein the emulsifier is the ammonium salt of the acid sulphuric acid ester of the addition product of an average of 10 mol of ethylene oxide to 1 mol of lauryl alcohol, and wherein, furthermore, the composition of the monomer mixture of monomers (A) to (D) corresponds to the integral composition of the desired copolymer, and the sum of percentages by weight of components 1a to 1d is 100;

II.   a)   The ratio $k_{Mon.}$ of the quantity of monomer initially provided in the reaction vessel, $p_{Mon.v.}$, to the sum of the quantity of monomer thus provided and the total quantity of water initially provided in the reaction vessel,

$$p_{H_2O \, v. total} = p_{H_2O \, E.v.} + p_{H_2O \, Ox.v.} + p_{H_2O \, Red.v.}$$

amounts to:

$$k_{Mon.} = \frac{p_{Mon.v.}}{(p_{Mon.v.} + p_{H_2O \, v. total})} \times 100 = 5.0-20,$$

   b)   The concentration $[E]_v$ of the quantity of emulsifier initially provides $p_{E.v.}$ in the total quantity of water initially provided $p_{H_2O \, v.}$ total amounts to:

$$[E]_v = \frac{p_{E.v.}}{p_{H_2O \, v. total}} \times 1000 = 2-40,$$

   c)   The concentration $[I]_v$ of the quantity of initiator initially provided, $p_{I.v.} = p_{Ox.v.} + p_{Red.v.}$, in the total quantity of water initially provided, $p_{H_2O \, v. total}$, amounts to:

47

$$[I]_v = \frac{p_v}{p_{H_2O\,.\,tota}} \times 1000 = 0.5-4$$

d) The proportion by weight $k_v$ of pyrosulphite to persulphate has a value in the following range:

$$k_v = \frac{p_{Red\,tota}}{p_{Ox\,tote}} = 0-4,$$

wherein the value 0 is applicable at polymerization temperatures above 55°C to 70°C and the values $> 0$ to 4 are applicable at polymerization temperatures in the range of 30 − 70°C,

e) The proportion by weight $v_{Mon.}$ of the quantity of monomer initially provided to the total quantity of monomer used has been fixed at the following values:

$$v_{Mon.} = \frac{p_{Mon.\,v.}}{(p_{Mon.\,v.} + p_{Mon.\,n.})} \times 100 = 2-15, \text{ and}$$

III. The reaction mixture initially provided, consisting of components $p_{H_2O\,E.v.} + p_{Mon.v.} + p_{E.v.}$ is heated to the desired polymerization temperature which lies in the range of from 30 to 70°C, components $p_{Ox.v}$ dissolved in $p_{H_2O\,Ox.v.}$ and $p_{Red.v.}$ dissolved in $p_{H_2O\,Red.v.}$ are added simultaneously but separately, and a constant polymerization temperature has been maintained, if necessary with cooling and the remaining components, $p_{Mon.n.}$, $p_{E.n.}$ dissolved in $p_{H_2O\,E.n.}$ and $p_{I.n} = p_{Ox.n.} + p_{Red.n.}$ dissolved in $p_{H_2O\,Ox.n.}$ and $p_{H_2O\,Red.n.}$ have been continuously added to the polymerizing mixture in the course of 2 to 8 hours and the mixture has subsequently been stirred for about 2 hours at the polymerization temperature.

2. A process for the preparation of finely divided, aqueous dispersions having an average particle diameter of from 0.1 to 0.15 μ and a solids content of from 40 to 50% by weight of copolymers of copolymerized units of:

(A) 20 to 48%    by weight of acrylonitrile, in which 40 to 60% by weight of the given quantity of acrylonitrile may be replaced by styrene,
(B) 47.5 to 70.5% by weight of n-Butyl acrylate,
(C) 3.5 to 4.5%   by weight of methacrylic acid or of a mixture of methacrylic and acrylic acid having an acrylic acid portion of not more than 50% by weight, and
(D) 0 to 5.0%     by weight of N-methoxymethyl-methacrylamide,

the sum of the percentage contents being 100,

by emulsion polymerization with exclusion of air and with stirring until virtually complete conversion of the monomers at temperatures of 30 to 70°C in the presence of an emulsifier and a water-soluble initator system with the addition of a part of monomers (A) to (D), a part of the emulsifier dissolved in water and a part of the initiator dissolved in water to a previously prepared reaction mixture of water, monomer mixture and emulsifier after polymerization has been released, characterised by the combination of the following features and the use of the following components:

I.   a)   59.7 to 48.4 % by weight of water ($p_{H_2O\,total}$)
       wherein

$$p_{H_2O\,total} = p_{H_2O\,E.v.} + p_{H_2O\,Ox.v.} + p_{H_2O\,Red.v.} + p_{H_2O\,E.n.} + p_{H_2O\,Ox.n.} + p_{H_2O\,Red.n.}$$

    b)   40.0 to 50.0 % by weight of the monomer mixture $p_{Mon.\,total}$ of components (A) to (D), wherein

$$p_{Mon.\,Total} = p_{Mon.\,v.} + p_{Mon.\,n.}$$

    c)   0.25 to 2.0 % by weight of emulsifier $p_{E.\,total}$,
       wherein

$$p_{E.\,total} = p_{E.v.} + p_{E.n.}, \text{ and}$$

    d)   0.025 to 0.4 % by weight of an initiator system $p_{I.total}$,
       wherein

$$p_{I.\,total} \text{ stands for } p_{I.v.} + p_{I.n.} = p_{Ox.v.} + p_{Red.v.} + p_{Ox.n.} + p_{Red.n.} = p_{Ox.\,total} + p_{Red.\,total},$$

wherein, further, the initiator system $p_{I.\,total}$ consists of potassium or ammonium peroxidisulphate or mixtures thereof or of the above mentioned persulphates and sodium or potassium pyrosulphite or mixtures thereof, and wherein the emulsifier ist the ammonium salt of the acid sulphuric acid ester of the addition product of an average of 10 mol of ethylene oxide and 1 mol of lauryl alcohol, and wherein, further, the composition of the monomer mixture of monomers (A) to (D) corresponds to the integral composition of the desired copolymer, and the sum of percentages by weight of components la to ld is 100;

II. a) the ratio $k_{Mon.}$ of the quantity of monomer initially provided, $p_{Mon.v.}$, to the sum of monomer initially provides and the total quantity of water initially providied,

$$p_{H_2O\ v.total} = p_{H_2O\ E.v.} + p_{H_2O\ Ox.v.} + p_{H_2O\ Red.v.}$$

amounts to:

$$k_{Mon.} = \frac{p_{Mon.v.}}{(p_{Mon.v.} + p_{H_2O\ v.total})} \times 100 = 5-20,$$

b) the concentration $[E]_v.$ of the quantity of emulsifier initially provides $p_{E.v.}$ in the total quantity of water initially provided $p_{H_2O\ v.total}$, amounts to:

$$[E]_v. = \frac{p_{E.v.}}{p_{H_2O\ v.total}} \times 1000 = 2-40,$$

c) the concentration $[I]_v.$ of the quantity of initiator initially provided, $p_{I.v.} = p_{Ox.v.} + p_{Red.v.}$, in the total quantity of water initially provided, $p_{H_2O\ v.total}$, amounts to:

$$[I]_v. = \frac{p_{I.v.}}{p_{H_2O\ v.total}} \times 1000 = 0.5-4,$$

d) the proportion by weight $k_{I.}$ of pyrosulphite to persulphate has a value in the following range:

$$k_{I.} = \frac{p_{Red.\ total}}{p_{Ox.\ total}} = 0-4,$$

wherein the value 0 is applicable at polymerization temperatures above 55°C and up to 70°C and the values $>0$ to 4 are applicable at polymerization temperatures from 30 to 70°C,

e) the proportion by weight $v_{Mon.}$ of the quantity of monomers initially provided in the reaction mixture to the total quantity of monomers used is fixed at the following values:

$$v_{Mon.} = \frac{p_{Mon.v.}}{(p_{Mon.v.} + p_{Mon.n.})} \times 100 = 2-15;$$

III. the initial reaction mixture of components $p_{H_2O\ E.v.} + p_{Mon.v.} + p_{E.v.}$ is heated to the desired polymerization temperature in the range of 30−70°C, components $p_{Ox.v.}$ dissolved in $p_{H_2O\ Ox.v.}$ and $p_{Red.v.}$ dissolved in $p_{H_2O\ Red.v.}$ are added simultaneously but separately, and a constant polymerization temperature is maintained, if necessary with cooling, and the remaining components, $p_{Mon.n.}$, $p_{E.n.}$, dissolved in $p_{H_2O\ E.n.}$ and $p_{I.n.} = p_{Oxn.} + p_{Red.n.}$, dissolved in $p_{H_2O\ Ox.n.}$ and $p_{H_2O\ Red.n.}$, are subsequently added continuously to the polymerizing mixture in the course of 2−8 hours and the mixture is subsequently stirred for about 2 hours at the polymerization temperature.

3. The use of the aqueous copolymer dispersions according to claim 1 as binders in unpigmented and pigmented aqueous paints.

**Revendications**

1. Dispersions aqueuses en fines particules, à un diamètre de particule moyen de 0,1 à 0,15 μm, et une teneur en matière solide de 40 à 50% en poids, de copolymères de motifs copolymérisés de:

(A) 20 à 48%    en poids d'acrylonitrile, dont 40 à 60% en poids peuvent être remplacés par du styrène,

(B) 47,5 à 70,5%  en poids d'acrylate de n-butyle,

(C) 3,5 à 4,5%    en poids d'acide méthacrylique ou d'un mélange d'acide méthacrylique et d'acide acrylique à une teneur en acide acrylique de 50% en poids au maximum, et

(C) 0 à 5%    en poids de N-méthoxyméthyl-méthacrylamide

— la somme des pourcentages étant égale à 100 —

préparées par polymérisation en émulsion à l'abri de l'air et sous agitation jusqu'à conversion pratiquement complète du monomère à des températures de 30 à 70°C, en présence d'un agent émulsionnant et d'un système inducteur hydrosoluble avec addition d'une partie des monomères A à D, d'une partie de l'agent émulsionnant en solution dans l'eau et d'une partie du système inducteur en solution dans l'eau à une masse préalable d'eau, de mélange de monomères et d'agent émulsionnant après déclenchement de la polymérisation, préparées par la combinaison des dispositions et caractérisées en ce que

I.    on met en oeuvre:

    a)    59,7 à 48,4 % en poids d'eau ($p_{H_2O\ ges.}$) avec

$$p_{H_2O\ ges.} = p_{H_2O\ e.v.} + p_{H_2O\ Ox.v.} + p_{H_2O\ Red.v.} + p_{H_2O\ E.n.} + p_{H_2O\ Ox.n.} + p_{H_2O\ Red.n.},$$

    b)    40,0 à 50,0 % en poids du mélange des monomères $p_{Mon.ges.}$ consistant en les composants A à D, avec,

$$p_{Mon.ges.} = p_{Mon.v.} + p_{Mon.n.},$$

    c)    0,25 à 2,0 % en poids d'agent émulsionnant $p_{4.ges.}$, avec

$$p_{E.ges.} = p_{E.v.} + p_{E.n.}$$

    et

    d)    0,25 à 0,4 % en poids d'un système inducteur

$p_{I.ges.}$, avec

$$p_{I.ges.}\ \text{pour}\ p_{I.v.} + p_{I.n.} = p_{Ox.v.} + p_{Red.v.} + p_{Ox.n.} + p_{Red.n.} = p_{Ox.ges.} + p_{Red.ges.}$$

    —    en outre le système inducteur $p_{I.ges.}$ consiste en peroxydisulfate de potassium ou d'ammonium ou leurs mélanges ou en les persulfates mentionnés et du pyrosulfite de sodium ou de potassium ou leurs mélanges, et

    —    l'agent émulsionnant est le sel d'ammonium de l'ester sulfurique acide du produit d'addition de 10 moles d'oxyde d'éthylène en moyenne sur 1 mole d'alcool laurylique, et en outre la composition du mélange des monomères consistant en les monomères A à D correspond à la composition intégrale du copolymère voulu, et la somme des pourcentages en poids des composants Ia à Id est égale à 100;

II.    a)    le rapport $k_{Mon.}$ de la quantité de monomères introduite au préalable, $p_{Mon.v.}$, à la somme de la quantité de monomères introduite au préalable et de la quantité totale d'eau introduite au préalable,

$$p_{H_2O\ v.ges.} = p_{H_2O\ E.v.} + p_{H_2O\ Ox.v.} + p_{H_2O\ red.v.}$$

    est fixé à:

$$k_{Mon.} = \frac{p_{Mon.v.}}{(p_{Mon.v.} + p_{H_2O\ v.ges.})} \times 100 = 5,0\ \text{à}\ 20,$$

    b)    la concentration $[E]_v$ de la quantité d'agent émulsionnant introduite au préalable $p_{E\ v.}$ dans la quantité d'eau totale introduite au préalable, $p_{H_2O\ v.ges.}$ est fixée à

$$[E]_v = \frac{p_{E.v.}}{p_{H_2O\ v.ges.}} \times 100 = 2\ \text{à}\ 40$$

    c)    la concentration $[I]_v$ de la quantité d'inducteur introduite au préalable, $p_{I.v.} = p_{Ox.v.} + p_{Red.v.}$, dans la quantité d'eau totale introduite au préalable, $p_{H_2O\ v.ges.}$, est fixée à

$$[I]_v = \frac{p_{I.v.}}{p_{H_2O\ v.ges.}} \times 1000 = 0,5\ \text{à}\ 4,$$

d) le rapport en poids $k_I$ du pyrosulfite au persulfate est fixé à des valeurs

$$k_I = \frac{p_{Red.\,ges.}}{p_{Ox.\,ges.}} = 0 \text{ à } 4,$$

la valeur 0 correspondant à des températures de polymérisation supérieures à + 55°C et allant jusqu'à 70°C et les valeurs supérieures à 0 et allant jusqu'à 4 pour les températures de polymérisation de 30 à 70°C,

e) le rapport en poids $v_{Mon.}$ de la quantité de monomères introduite au préalable à la quantité totale de monomères mise en oeuvre est fixé à des valeurs de

$$v_{Mon.} = \frac{p_{Mon.\,v.}}{(p_{Mon.\,v.} + p_{Mon.\,n.})} \times 100 = 2 \text{ à } 15,$$

et

III. la masse préalable des composants $p_{H_2O\,E.v.} + p_{Mon.\,v.} + p_{E.v.}$ est chauffée à la température voulue pour la polymérisation, dans l'intervalle de 30 à 70°C, on ajoute les composants $p_{Ox.\,v.}$, en solution dans $p_{H_2O\,Ox.v.}$ et $p_{Red.\,v.}$ en solution dans $p_{H_2O\,Red.v.}$, en même temps mais séparément, en maintenant une température de polymérisation constante, éventuellement par refroidissement, et on introduit ensuite les composants restents, $p_{Mon.\,n.}$, $p_{E.\,n.}$ en solution dans $p_{H_2O\,E.n.}$ et $p_{I.\,n.} = p_{Ox.\,n.} + p_{Red.\,n.}$, en solution dans $p_{H_2O\,Ox.n.}$ et $p_{H_2O\,Red.n.}$, en continu, dans le cours de 2 à 8 h, dans le mélange en cours de polymérisation, après quoi on agite encore environ 2 h à la température de polymérisation.

2. Procédé de préparation de dispersions aqueuses en fines particules, à un diamètre de particule moyen de 0,1 à 0,15 μm et à une teneur en matière solide de 40 à 50% en poids, de copolymères de motifs copolymérisés de:

(A) 20 à 48% en poids d'acrylonitrile dont 40 à 60% en poids peuvent être remplacés par le styrène,
(B) 47,5 à 70,5% en poids d'acrylate de n-butyle,
(C) 3,5 à 4,5% en poids d'acide méthacrylique ou d'un mélange d'acide méthacrylique et d'acide acrylique à une proportion en acide acrylique qui est au maximum de 50% en poids, et
(D) 0 à 5,0% en poids de N-méthoxyméthyl-méthacrylamide

— la somme des pourcentages étant égale à 100 —

par polymérisation en émulsion à l'abri de l'air et sous agitation jusqu'à conversion pratiquement complète des monomères, à des températures de 30 à 70°C en présence d'un agent émulsionnant et d'un système inducteur hydrosoluble, avec addition d'une partie des monomères A à D, d'une partie de l'agent émulsionnant en solution dans l'eau et d'une partie du système inducteur en solution dans l'eau à une masse préalable d'eau, du mélange de monomères et d'agent émulsionnant après déclenchement de la polymérisation, caractérisé par la combinaison de dispositions, selon laquelle

I. on met en oeuvre

a) 59,7 à 48,4% en poids d'eau ($p_{H_2O\,ges.}$), avec

$$p_{H_2O\,ges.} = p_{H_2O\,E.v.} + p_{H_2O\,Ox.v.} + p_{H_2O\,Red.v.} + p_{H_2O\,E.n.} + p_{H_2O\,Ox.n.} + p_{H_2O\,Red.n.}$$

b) 40,0 à 50,0% en poids du mélange des monomères $p_{Mon.\,ges.}$ consistant en les composants A à D, avec,

$$p_{Mon.\,ges.} = p_{Mon.\,v.} + p_{Mon.\,n.},$$

c) 0,25 à 2,0% en poids d'agent émulsionnant $p_{E.\,ges.}$, avec

$$p_{E.\,ges.} = p_{E.\,v.} + p_{E.\,n.}$$

et

d) 0,025 à 0,4% en poids d'un système inducteur, $p_{I.\,ges.}$, avec

$$p_{I.\,ges.} \text{ pour } p_{I.\,v.} + p_{I.\,n.} = p_{Ox.\,v.} + p_{Red.\,v.} + p_{Ox.\,n.} + p_{Red.\,n.} = p_{Ox.\,ges.} + p_{Red.\,ges.}$$

— en outre, le système dinducteur $p_{I.\,ges.}$ consiste en peroxydisulfate de potassium ou d'ammonium ou leurs mélanges, ou en les persulfates mentionnés et du pyrosulfite de sodium ou de potassium ou leurs mélanges, et

— l'agent émulsionnant est le sel d'ammonium de l'ester sulfurique acide du produit d'addition de 10 moles en moyenne d'oxyde d'éthylène sur 1 mole d'alcool laurylique, et en outre la composition du mélange des monomères consistant en les monomères A à D correspond à la composition intégrale du copolymère recherché, et la somme des pourcentages des composants Ia à Id est égale à 100:

II. a) on fixe le rapport $k_{Mon.}$ de la quantité de monomères introduite au préalable, $p_{Mon\,v.}$ à la somme de la quantité de monomères introduite au préalable et de la quantité totale d'eau introduite au préalable,

$$p_{H_2O\,v.ges.} = p_{H_2O\,E.v.} + p_{H_2O\,Ox.v.} + p_{H_2O\,red.v.}$$

à

$$k_{Mon.} = \frac{p_{Mon.v.}}{(p_{Mon.v.} + p_{H_2O\,v.ges.})} \times 100 = 5\ \text{à}\ 20$$

b) on fixe la concentration $[E]_v$ de la quantité d'agent émulsionnant introduite au préalable $p_{E.v.}$ dans la quantité d'eau totale introduite au préalable $p_{H_2O\,v.ges.}$ à:

$$[E]_v = \frac{p_{E.v.}}{p_{H_2O\,v.ges.}} \times 1000 = 2\ \text{à}\ 40$$

c) on fixe la concentration $[I]_v$ de la quantité d'inducteur introduite au préalable, $p_{I\,v} = p_{Ox.v.} + p_{Red.v.}$, dans la quantité totale d'eau introduite au préalable, $p_{H_2O\,v.ges.}$, à

$$[I]_v = \frac{p_{I.v.}}{p_{H_2O\,v.ges.}} \times 1000 = 0,5\ \text{à}\ 4$$

d) on fixe le rapport en poids $k_I$ du pyrosulfite au persulfate à des valeurs de:

$$k_I = \frac{p_{Red.ges.}}{p_{Ox.ges.}} = 0\ \text{à}\ 4,$$

la valeur 0 s'appliquant aux températures de polymérisation supérieures à + 55°C et allant jusqu'à 70°C et les valeurs supérieures à 0 et allant jusqu'à 4 s'appliquant aux températures de polymérisation de 30 à 70°C,

e) on fixe le rapport en poids $v_{Mon.}$ de la quantité de monomères introduite au préalable à la quantité de monomères mise en oeuvre à des valeurs de:

$$v_{Mon.} = \frac{p_{Mon.v.}}{(p_{Mon.v.} + p_{Mon.n.})} \times 100 = 2\ \text{à}\ 15$$

III. on chauffe la masse préalable des composants $p_{H_2O\,E.v.} + p_{Mon.v.} + p_{E.v.}$ à la température voulue pour la polymérisation dans l'intervalle de 30 à 70°C, on ajoute les composants $p_{Ox.v.}$ en solution dans $p_{H_2O\,Ox.v.}$ et $p_{Red.v.}$ en solution dans $p_{H_2O\,Red.v.}$ simultanément mais séparément en maintenant une température de polymérisation constante, éventuellement par refroidissement, on introduit ensuite le reste des composants, $p_{Mon.n.}$, $p_{E.n.}$ en solution dans $p_{H_2O\,E.n.}$ et $p_{I.n.} = p_{Ox.n.} + p_{Red.n.}$, en solution dans $p_{H_2O\,Ox.n.}$ et $p_{H_2O\,Red.n.}$, dans le cours de 2 à 8 h, en continu, dans le mélange en cours de polymérisation et on agite encore 2 h environ à la températurede polymérisation.

3. Utilisation des dispersions aqueuses de copolymères selon la revendication 1 en tant que liants pour des produits de revêtement aqueux pigmentés ou non.